# EUROPEAN PATENT APPLICATION

(11) **EP 4 468 153 A1**
(43) Date of publication of application: **27.11.2024**
(21) Application number: 23765987.5
(22) Date of filing: 07.03.2023
(51) Int. Cl.: G06F 9/54

(54) **MODEL INVOKING METHOD AND APPARATUS, AND STORAGE MEDIUM**

(30) Priority: 09.03.2022 CN 202210222968
(71) Applicant: Huawei Technologies Co., Ltd., Shenzhen, Guangdong 518129 (CN)
(72) Inventor: ZHANG, Yu, Shenzhen, Guangdong 518129 (CN); TANG, Wen, Shenzhen, Guangdong 518129 (CN)
(74) Representative: Goddar, Heinz J.
(86) International application number: PCT/CN2023/080050
(87) International publication number: WO 2023/169409

(57) **Abstract**

Embodiments of this application disclose a model invoking method and apparatus, and a storage medium, and belong to the field of computer technologies. In embodiments of this application, a first device verifies model use permission of an AI application based on a model identifier of a to-be-invoked target AI model and a permission verification parameter of the AI application, to ensure that the AI application is a valid application that has use permission. When the verification on the model use permission of the AI application succeeds, an encrypted model file of the target AI model is decrypted in a TEE, to obtain a decrypted model file; the decrypted model file is directly loaded to a memory, to run the target AI model; and inference data of the AI application is further processed by using the target AI model. In the entire process, the decrypted model file of the target AI model is stored in the memory, in other words, the decrypted model file of the target AI model is not flushed to disk. This effectively ensures secure application of the target AI model.

## Description

This application claims priority to Chinese Patent Application No. 202210222968.3, filed with the China National Intellectual Property Administration on March 9, 2022 and entitled "MODEL INVOKING METHOD AND APPARATUS, AND STORAGE MEDIUM", which is incorporated herein by reference in its entirety.

### TECHNICAL FIELD

This application relates to the field of computer technologies, and in particular, to a model invoking method and apparatus, and a storage medium.

### BACKGROUND

With rapid development of computer technologies and artificial intelligence (artificial intelligence, AI) technologies, AI applications are widely used in various industries. The AI application is an application that implements service logic by invoking an AI model.

Generally, a developer of the AI application may not be the same as a developer of the AI model. To ensure data security of the AI model, before a first device that is deployed with the AI application and that has valid use permission runs the AI model, a second device that provides the AI model may encrypt an AI model file via a third-party encryption server, and then send an encrypted model file to the first device. Then, the first device obtains an encryption key from the encryption server, and decrypts the encrypted model file by using the encryption key, to obtain plaintext of the AI model file, and store the plaintext of the AI model file in a local storage device, so that the AI model file is subsequently loaded to run the AI model.

However, after storing the plaintext of the AI model file in the local storage device, the first device may send the plaintext of the AI model file to any device at any time for use. In other words, the second device cannot control further use of the AI model file by the first device after the first device obtains the plaintext of the AI model file. In this case, parameters related to the AI model file still have a risk of being leaked.

### SUMMARY

Embodiments of this application provide a model invoking method and apparatus, and a storage medium, to ensure secure use of an AI model. The technical solutions are as follows.

According to a first aspect, a model invoking method is provided, and is applied to a first device, where an artificial intelligence AI application is deployed in the first device, and the method includes: in response to a model invoking request of the AI application, verifying model use permission of the AI application based on a model identifier of a to-be-invoked target AI model and a permission verification parameter of the AI application; when the verification on the model use permission of the AI application succeeds, decrypting an encrypted model file of the target AI model in a trusted execution environment TEE, to obtain a decrypted model file; loading the decrypted model file to a memory, to run the target AI model; and processing inference data of the AI application by using the target AI model, to obtain an inference result.

In embodiments of this application, the first device verifies the model use permission of the AI application based on the model identifier of the to-be-invoked target AI model and the permission verification parameter of the AI application. In this way, access permission control can be performed on the first device, to ensure that the AI application in the first device invokes the target AI model validly. When the verification on the model use permission of the AI application succeeds, the first device may decrypt the encrypted model file of the target AI model in the TEE, to obtain the decrypted model file; directly load the decrypted model file to the memory, to run the target AI model; and further process the inference data of the AI application by using the target AI model, to obtain the inference result. In this way, in the entire process, the decrypted model file of the target AI model is stored in the memory, in other words, the decrypted model file of the target AI model is not flushed to disk, and another device cannot access the decrypted model file of the target AI model. This effectively ensures secure application of the target AI model.

Optionally, after the processing inference data of the AI application by using the target AI model, to obtain an inference result, the method further includes: when detecting that the AI application stops running, deleting the decrypted model file from the memory.

In this embodiment of this application, when it is detected that the AI application stops running, the decrypted model file is deleted from the memory. This effectively ensures security of a model file.

Optionally, the first device stores encrypted access control information. An implementation process of verifying the model use permission of the AI application based on the model identifier of the to-be-invoked target AI model and the permission verification parameter of the AI application is: decrypting the encrypted access control information in the TEE, to obtain decrypted access control information; and verifying the model use permission of the AI application based on the model identifier of the target AI model, the permission verification parameter, and the decrypted access control information.

In this embodiment of this application, the process of decrypting the encrypted access control information is performed in the TEE. This can effectively prevent the access control information from being tampered with.

Optionally, the access control information includes at least one access control entry of an AI model, and an access control entry of each AI model includes a model identifier and an authorization verification parameter that are of the corresponding AI model. The verifying the model use permission of the AI application based on the model identifier of the target AI model, the permission verification parameter, and the decrypted access control information includes: obtaining an access control entry of the target AI model from the decrypted access control information based on the model identifier of the target AI model; searching the access control entry of the target AI model for a first access control entry in which an included authorization verification parameter matches the permission verification parameter; and when the first access control entry is found, determining that the verification on the model use permission of the AI application succeeds. The permission verification parameter includes at least one of a device identifier of the first device, invoking time, and an application identifier of the AI application.

In this embodiment of this application, the access control entry of the target AI model is first obtained from the decrypted access control information based on the model identifier of the target AI model; then the obtained access control entry of the target AI model is searched for the first access control entry in which the included authorization verification parameter matches the permission verification parameter of the AI application; and when the first access control entry is found, it is determined that the verification on the model use permission of the AI application succeeds. Because the permission verification parameter includes verification parameters in a plurality of dimensions, fine-grained permission control can be performed on the model use permission of the AI application in the plurality of dimensions, to ensure that the AI application is a valid application that has the model use permission.

Optionally, the access control entry of the target AI model includes first signature information, the first signature information is obtained by a second device by performing digital signing on the access control entry of the target AI model, and the second device is a device that provides the target AI model. Before the searching the access control entry of the target AI model for a first access control entry in which an included authorization verification parameter matches the permission verification parameter, the method further includes: verifying the first signature information; and when the verification on the first signature information succeeds, performing the step of searching the access control entry of the target AI model for the first access control entry in which the included authorization verification parameter matches the permission verification parameter.

In this embodiment of this application, before the first access control entry is searched for, that is, before the verification on the model use permission of the AI application succeeds, the access control entry of the target AI model may be verified. The first access control entry is searched for only when the verification on the access control entry of the target AI model succeeds. In this way, it can be ensured that the access control entry of the target AI model is not tampered with. In this case, the step of searching the access control entry of the target AI model for the first access control entry in which the included authorization verification parameter matches the permission verification parameter is performed, to ensure accuracy of a permission verification result subsequently obtained based on the access control entry.

Optionally, the decrypted model file includes second signature information, the second signature information is obtained by the second device by performing digital signing on the decrypted model file, and the second device is the device that provides the target AI model. Before the loading the decrypted model file to a memory, the method further includes: verifying the second signature information; and when the verification on the second signature information succeeds, performing the step of loading the decrypted model file to the memory.

In this embodiment of this application, the decrypted model file further includes the second signature information. In this case, before the decrypted model file is loaded to the memory, the second signature information is verified. The decrypted model file is loaded to the memory for running only when the verification on the second signature information succeeds. In this way, it can be ensured that the decrypted model file is a model file that is not tampered with, thereby ensuring the security of the model file.

Optionally, the model invoking method further includes: sending a permission application request of the AI application to the second device according to a secure transmission protocol, where the permission application request includes the model identifier and a to-be-applied authorization verification parameter that are of the target AI model, and the second device is the device that provides the target AI model; receiving the access control entry of the target AI model and the decrypted model file that are sent by the second device according to the secure transmission protocol, where the access control entry of the target AI model is generated by the second device based on the model identifier and the to-be-applied authorization verification parameter that are of the target AI model; encrypting the access control entry of the target AI model and the decrypted model file in the TEE, to obtain an encrypted access control entry of the target AI model and the encrypted model file; and storing the encrypted access control entry of the target AI model and the encrypted model file.

In this embodiment of this application, the first device may send the permission application request of the AI application to the second device according to the secure transmission protocol, and receive the access control entry of the target AI model and the decrypted model file that are sent by the second device according to the secure transmission protocol. In this way, the model use permission of the AI application can be subsequently verified based on the access control entry, to ensure that the AI application is the valid application that has the model use permission. In addition, after receiving the access control entry of the target AI model and the decrypted model file that are sent by the second device, the first device directly encrypts the access control entry and the decrypted model file in the TEE. This can prevent the access control entry from being tampered with, and the first device cannot obtain plaintext of the decrypted model file, thereby effectively ensuring the security of the model file.

Optionally, the first device includes a control component, and the model invoking request of the AI application is a request sent by the AI application to the control component by invoking an API interface provided by the control component.

The control component in the first device may provide the API interface, and the control component includes logic code applicable to different underlying hardware architectures. In this way, in a developing process, a developer of the AI application does not need to consider code implementation differences caused by the different underlying hardware architectures. This greatly reduces development difficulty of the AI application.

According to a second aspect, a model invoking method is provided, and is applied to a second device, where a target AI model is run on the second device, and the method includes: receiving a model invoking request that is of an AI application and that is sent by a first device, where the model invoking request includes a model identifier of a to-be-invoked target AI model, a permission verification parameter, and inference data, and the AI application is deployed in the first device; verifying model use permission of the AI application based on the model identifier of the target AI model and the permission verification parameter; when the verification on the model use permission of the AI application succeeds, processing the inference data by using the target AI model, to obtain an inference result; and sending the inference result to the first device.

In this embodiment of this application, the target AI model is run on the second device, and the AI application is deployed in the first device. The second device may receive the model invoking request that is of the AI application and that is sent by the first device, and verify the model use permission of the AI application based on the model identifier of the target AI model and the permission verification parameter that are included in the model invoking request. In this way, it can be ensured that the AI application is a valid application that has the model use permission. When the verification on the model use permission of the AI application succeeds, the inference data included in the model invoking request of the AI application is processed by using the target AI model, to obtain the inference result, and the inference result is sent to the first device. Because the target AI model is always running on the second device in the entire invoking process, the first device cannot obtain model plaintext of the target AI model. This effectively ensures secure application of the target AI model.

Optionally, the second device stores access control information, the access control information includes an access control entry of the target AI model, and the access control entry of the target AI model includes the model identifier and an authorization verification parameter that are of the target AI model. An implementation process of verifying the model use permission of the AI application based on the model identifier of the target AI model and the permission verification parameter is: obtaining the access control entry of the target AI model from the access control information based on the model identifier of the target AI model; searching the access control entry of the target AI model for a first access control entry in which an included authorization verification parameter matches the permission verification parameter; and when the first access control entry is found, determining that the verification on the model use permission of the AI application succeeds.

In this embodiment of this application, the access control entry of the target AI model is first obtained from decrypted access control information based on the model identifier of the target AI model; then the obtained access control entry of the target AI model is searched for the first access control entry in which the included authorization verification parameter matches the permission verification parameter of the AI application; and when the first access control entry is found, it is determined that the verification on the model use permission of the AI application succeeds. Because the permission verification parameter includes verification parameters in a plurality of dimensions, the model use permission of the AI application can be verified in the plurality of dimensions, to ensure that the AI application is the valid application that has the model use permission.

Optionally, the permission verification parameter includes a device identifier of the first device, invoking time, and a to-be-verified random number, the to-be-verified random number is a random number that is stored in the first device and that is used to verify the model use permission of the AI application. An authorization verification parameter in the access control entry includes an identifier of an authorized device, an authorized time period, and an authorization random number, and the first access control entry is an entry in which an included identifier of an authorized device is the device identifier of the first device, an included authorization random number is the to-be-verified random number, and an included authorized time period includes the invoking time.

In this embodiment of this application, the permission verification parameter and the access control entry may include parameters in a plurality of dimensions. The model use permission of the AI application is verified based on the permission verification parameter and the access control entry, to implement fine-grained control on access permission of the AI application for an AI model.

Optionally, the to-be-verified random number includes third signature information. Before the searching the access control entry of the target AI model for a first access control entry in which an included authorization verification parameter matches the permission verification parameter, the method further includes: verifying the third signature information of the to-be-verified random number in a trusted execution environment TEE; and when the verification on the third signature information succeeds, performing the step of searching the access control entry of the target AI model for the first access control entry in which the included authorization verification parameter matches the permission verification parameter.

The third signature information of the to-be-verified random number is verified in the TEE, to ensure that when the access control entry of the target AI model is subsequently searched for the first access control entry in which the included authorization verification parameter matches the permission verification parameter, the to-be-verified random number included in the permission verification parameter is a valid random number that is not tampered with.

Optionally, the model invoking method further includes: receiving a permission application request sent by the first device according to a secure transmission protocol, where the permission application request includes the model identifier and a to-be-applied authorization verification parameter that are of the target AI model; generating the authorization random number; and generating the first access control entry of the target AI model based on the model identifier and the to-be-applied authorization verification parameter that are of the target AI model, and the authorization random number, where the authorization verification parameter in the first access control entry includes the to-be-applied authorization verification parameter and the authorization random number.

In this embodiment of this application, the second device may receive the permission application request sent by the first device according to the secure transmission protocol, generate the authorization random number, and then generate the first access control entry of the target AI model based on the model identifier and the to-be-applied authorization verification parameter that are of the target AI model, and the authorization random number that are included in the permission application request. In this way, the model use permission of the AI application is subsequently verified based on the first access control entry, and access permission control can be performed on the first device, to ensure that a device that invokes the target AI model is a device that has valid use permission.

Optionally, after the generating the first access control entry of the target AI model, the method further includes: performing digital signing in the TEE on the first access control entry, to obtain a signed first access control entry, where the signed first access control entry includes the third signature information; and sending the signed first access control entry to the first device.

In this embodiment of this application, after the first access control entry of the target AI model is generated, digital signing is performed in the TEE on the first access control entry. In this way, it can be ensured that the access control entry is not tampered with.

Optionally, the signed first access control entry is obtained by performing digital signing by using a first private key, where the first private key is a model certificate private key of the target AI model. When sending the signed first access control entry to the first device, the method further includes: sending, to the first device, a device certificate that is of the second device and that is signed by using a second private key and a model certificate that is of the target AI model and that is signed by using a third private key, where a model certificate of the target AI model includes a model certificate public key of the target AI model. The second private key is a root certificate private key, the third private key is a device certificate private key of the second device, the signed device certificate of the second device is used by the first device to perform signature verification on the signed model certificate of the target AI model, and the signed model certificate of the target AI model is used by the first device to perform signature verification on the signed first access control entry.

Because the first access control entry is obtained by performing digital signing by using the first private key (in other words, the model certificate private key of the target AI model), when verifying the first access control entry, the first device may verify the first access control entry by using the model certificate public key of the target AI model. The model certificate public key is stored in the model certificate of the target AI model, the model certificate is signed by using the device certificate private key of the second device, and a device certificate public key of the second device is stored in the second device. Therefore, when the signed access control entry is sent to the first device, a device certificate of the second device and the model certificate of the target AI model further need to be sent to the first device, so that the second device verifies the first access control entry.

Optionally, the second device stores a first private key encrypted by using the third private key and a third private key encrypted by using a device root key of the second device, and the device root key of the second device is stored in the TEE. When digital signing is performed in the TEE on the first access control entry, the method further includes: decrypting the encrypted third private key in the TEE by using the device root key of the second device, and obtaining the first private key by using the third private key.

Optionally, the second device stores a first private key encrypted by using the device root key of the second device, and the device root key of the second device is stored in the TEE. When digital signing is performed in the TEE on the first access control entry, the method further includes: decrypting the encrypted first private key in the TEE by using the device root key of the second device, to obtain the first private key.

Optionally, the model invoking method further includes: generating the model certificate of the target AI model and the first private key; performing digital signing in the TEE on the model certificate of the target AI model by using the third private key, and encrypting the first private key by using the third private key or the device root key of the second device; and storing the signed model certificate of the target AI model and the encrypted first private key.

In this embodiment of this application, after developing an AI model, the second device that provides the target AI model may generate a model certificate for the AI model, to perform cryptographic processing on the AI model based on the model certificate in a subsequent invoking process, thereby ensuring security of the AI model.

According to a third aspect, a model invoking apparatus is provided, where the model invoking apparatus has a function of implementing the model invoking method in the first aspect. The model invoking apparatus includes at least one module, and the at least one module includes a verification module, a decryption module, a running module, and a processing module.

The verification module is configured to: in response to a model invoking request of an AI application, verify model use permission of the AI application based on a model identifier of a to-be-invoked target AI model and a permission verification parameter of the AI application. The decryption module is configured to: when the verification on the model use permission of the AI application succeeds, decrypt an encrypted model file of the target AI model in a trusted execution environment TEE, to obtain a decrypted model file. The running module is configured to load the decrypted model file to a memory, to run the target AI model. The processing module is configured to process inference data of the AI application by using the target AI model, to obtain an inference result.

Optionally, the apparatus further includes a deletion module, configured to: when detecting that the AI application stops running, delete the decrypted model file from the memory.

Optionally, a first device stores encrypted access control information. The verification module includes: a decryption submodule, configured to decrypt the encrypted access control information in the TEE, to obtain decrypted access control information; and a verification submodule, configured to verify the model use permission of the AI application based on the model identifier of the target AI model, the permission verification parameter, and the decrypted access control information.

Optionally, the access control information includes at least one access control entry of an AI model, and an access control entry of each AI model includes a model identifier and an authorization verification parameter that are of the corresponding AI model. The verification submodule is configured to: obtain an access control entry of the target AI model from the decrypted access control information based on the model identifier of the target AI model; search the access control entry of the target AI model for a first access control entry in which an included authorization verification parameter matches the permission verification parameter; and when the first access control entry is found, determine that the verification on the model use permission of the AI application succeeds.

Optionally, the access control entry of the target AI model includes first signature information, the first signature information is obtained by a second device by performing digital signing on the access control entry of the target AI model, and the second device is a device that provides the target AI model. The verification submodule is further configured to: verify the first signature information; and when the verification on the first signature information succeeds, perform the step of searching the access control entry of the target AI model for the first access control entry in which the included authorization verification parameter matches the permission verification parameter.

Optionally, the permission verification parameter includes at least one of a device identifier of the first device, invoking time, and an application identifier of the AI application.

Optionally, the decrypted model file includes second signature information, the second signature information is obtained by the second device by performing digital signing on the decrypted model file, and the second device is the device that provides the target AI model. The apparatus is further configured to: verify the second signature information; and when the verification on the second signature information succeeds, trigger the running module to perform the step of loading the decrypted model file to the memory.

Optionally, the apparatus is further configured to: send a permission application request of the AI application to the second device according to a secure transmission protocol, where the permission application request includes the model identifier and a to-be-applied authorization verification parameter that are of the target AI model, and the second device is the device that provides the target AI model; receive the access control entry of the target AI model and the decrypted model file that are sent by the second device according to the secure transmission protocol, where the access control entry of the target AI model is generated by the second device based on the model identifier and the to-be-applied authorization verification parameter that are of the target AI model; encrypt the access control entry of the target AI model and the decrypted model file in the TEE, to obtain an encrypted access control entry of the target AI model and the encrypted model file; and store the encrypted access control entry of the target AI model and the encrypted model file.

Optionally, the first device includes a control component, and the model invoking request of the AI application is a request sent by the AI application to the control component by invoking an API interface provided by the control component.

According to a fourth aspect, a model invoking apparatus is provided, where the model invoking apparatus has a function of implementing the model invoking method and behavior in the second aspect. The model invoking apparatus includes at least one module, and the at least one module includes a receiving module, a verification module, a processing module, and a sending module.

The receiving module is configured to receive a model invoking request that is of an AI application and that is sent by a first device, where the model invoking request includes a model identifier of a to-be-invoked target AI model, a permission verification parameter, and inference data, and the AI application is deployed in the first device. The verification module is configured to verify model use permission of the AI application based on the model identifier of the target AI model and the permission verification parameter. The processing module is configured to: when the verification on the model use permission of the AI application succeeds, process the inference data by using the target AI model, to obtain an inference result. The sending module is configured to send the inference result to the first device.

Optionally, a second device stores access control information, the access control information includes an access control entry of the target AI model, and the access control entry of the target AI model includes the model identifier and an authorization verification parameter that are of the target AI model. The verification module is configured to: obtain the access control entry of the target AI model from the access control information based on the model identifier of the target AI model; search the access control entry of the target AI model for a first access control entry in which an included authorization verification parameter matches the permission verification parameter; and when the first access control entry is found, determine that the verification on the model use permission of the AI application succeeds.

Optionally, the permission verification parameter includes a device identifier of the first device, invoking time, and a to-be-verified random number, the to-be-verified random number is a random number that is stored in the first device and that is used to verify the model use permission of the AI application. An authorization verification parameter in the access control entry includes an identifier of an authorized device, an authorized time period, and an authorization random number, and the first access control entry is an entry in which an included identifier of an authorized device is the device identifier of the first device, an included authorization random number is the to-be-verified random number, and an included authorized time period includes the invoking time.

Optionally, the to-be-verified random number includes third signature information. The verification module is mainly configured to: verify the third signature information of the to-be-verified random number in a trusted execution environment TEE; and when the verification on the third signature information succeeds, perform the step of searching the access control entry of the target AI model for the first access control entry in which the included authorization verification parameter matches the permission verification parameter.

Optionally, the apparatus is further configured to: receive a permission application request sent by the first device according to a secure transmission protocol, where the permission application request includes the model identifier and a to-be-applied authorization verification parameter that are of the target AI model; generate the authorization random number; and generate the first access control entry of the target AI model based on the model identifier and the to-be-applied authorization verification parameter that are of the target AI model, and the authorization random number, where the authorization verification parameter in the first access control entry includes the to-be-applied authorization verification parameter and the authorization random number.

Optionally, the apparatus is configured to: perform digital signing in the TEE on the first access control entry, to obtain a signed first access control entry, where the signed first access control entry includes the third signature information; and send the signed first access control entry to the first device.

Optionally, the signed first access control entry is obtained by performing digital signing by using a first private key, where the first private key is a model certificate private key of the target AI model. When sending the signed first access control entry to the first device, the apparatus is further configured to send, to the first device, a device certificate that is of the second device and that is signed by using a second private key and a model certificate that is of the target AI model and that is signed by using a third private key, where a model certificate of the target AI model includes a model certificate public key of the target AI model. The second private key is a root certificate private key, the third private key is a device certificate private key of the second device, the signed device certificate of the second device is used by the first device to perform signature verification on the signed model certificate of the target AI model, and the signed model certificate of the target AI model is used by the first device to perform signature verification on the signed first access control entry.

Optionally, the second device stores a first private key encrypted by using the third private key and a third private key encrypted by using a device root key of the second device, and the device root key of the second device is stored in the TEE. The apparatus is further configured to: decrypt the encrypted third private key in the TEE by using the device root key of the second device, and obtain the first private key by using the third private key.

Optionally, the second device stores a first private key encrypted by using the device root key of the second device, and the device root key of the second device is stored in the TEE. The apparatus is further configured to decrypt the encrypted first private key in the TEE by using the device root key of the second device, to obtain the first private key.

Optionally, the apparatus is further configured to: generate the model certificate of the target AI model and the first private key; perform digital signing in the TEE on the model certificate of the target AI model by using the third private key, encrypt the first private key by using the third private key or the device root key of the second device; and store the signed model certificate of the target AI model and the encrypted first private key.

According to a fifth aspect, a model invoking apparatus is provided. A structure of the model invoking apparatus includes a processor and a memory. The memory is configured to: store a program that supports the model invoking apparatus in performing the model invoking method according to the first aspect or the second aspect, and store data used to implement the model invoking method according to the first aspect or the second aspect. The processor is configured to execute the program stored in the memory.

According to a sixth aspect, a computer-readable storage medium is provided. The computer-readable storage medium stores instructions. When the instructions are run on a computer, the computer is enabled to perform the model invoking method according to the first aspect or the second aspect.

According to a seventh aspect, a computer program product including instructions is provided. When the computer program product runs on a computer, the computer is enabled to perform the model invoking method according to the first aspect or the second aspect.

Technical effects obtained in the third aspect to the seventh aspect are similar to the technical effects obtained by using corresponding technical means in the first aspect or the second aspect. Details are not described herein again.

The technical solution provided in embodiments of this application brings at least the following beneficial effects:

In embodiments of this application, a first device verifies model use permission of an AI application based on a model identifier of a to-be-invoked target AI model and a permission verification parameter of the AI application. In this way, access permission control can be performed on the first device, to ensure that the AI application is a valid application that has the model use permission. When verification on the model use permission of the AI application succeeds, the first device may decrypt an encrypted model file of the target AI model in a TEE, to obtain a decrypted model file; directly load the decrypted model file to a memory, to run the target AI model; and further process inference data of the AI application by using the target AI model, to obtain an inference result. In this way, in the entire process, the decrypted model file of the target AI model is stored in the memory, in other words, the decrypted model file of the target AI model is not flushed to disk, and another device cannot access the decrypted model file. This effectively ensures secure application of the target AI model.

### BRIEF DESCRIPTION OF DRAWINGS

FIG. 1 is a diagram of a system architecture related to a model invoking method according to an embodiment of this application;
FIG. 2 is a flowchart of a model certificate generation and processing method according to an embodiment of this application;
FIG. 3 is a flowchart of interaction between components in a second device to generate and process a model certificate according to an embodiment of this application;
FIG. 4 is a flowchart of a method in which an AI application applies for use permission of a target AI model before local invoking according to an embodiment of this application;
FIG. 5A and FIG. 5B are a flowchart of a method of interaction between a first device and a second device during local invoking to implement permission application of an AI application according to an embodiment of this application;
FIG. 6 is a flowchart of a local invoking method for a target AI model according to an embodiment of this application;
FIG. 7 is a flowchart of interaction between components in a first device to implement local model invoking according to an embodiment of this application;
FIG. 8 is another flowchart of interaction between components in a first device to implement local model invoking according to an embodiment of this application;
FIG. 9 is a flowchart of a method in which an AI application applies for use permission of a target AI model during remote invoking according to an embodiment of this application;
FIG. 10 is a flowchart of interaction between a first device and a second device during remote invoking to implement permission application of an AI application according to an embodiment of this application;
FIG. 11 is a flowchart of a remote model invoking method for a target AI model according to an embodiment of this application;
FIG. 12 is a flowchart of interaction between components in a first device and a second device to implement remote invoking according to an embodiment of this application;
FIG. 13 is a schematic diagram of a structure of a model invoking apparatus according to an embodiment of this application; and
FIG. 14 is a schematic diagram of a structure of another model invoking apparatus according to an embodiment of this application.

### DESCRIPTION OF EMBODIMENTS

To make objectives, technical solutions, and advantages of embodiments of this application clearer, the following further describes implementations of this application in detail with reference to the accompanying drawings.

An application scenario of embodiments of this application is first described before embodiments of this application are described in detail.

In recent years, with rapid development of computer technologies and AI technologies, AI applications are widely used in various industries. The AI application is an application that implements service logic by invoking an AI model. The AI model plays an important role in development and execution of the AI application. Generally, a developer of the AI model may not be the same as a developer of the AI application. For the developer of the AI model, the AI model needs to go through a plurality of phases such as design, training, verification, and the like before being put into use. The entire process needs to consume a large amount of computing resources and time. Therefore, after the AI model is put into an application system, how to ensure security of parameters of the AI model is particularly important. Based on this, embodiments of this application provide a model invoking method. The method may be applied to a process in which the AI application invokes the AI model, to protect the security of the parameters of the AI model.

A system architecture used in embodiments of this application is described below.

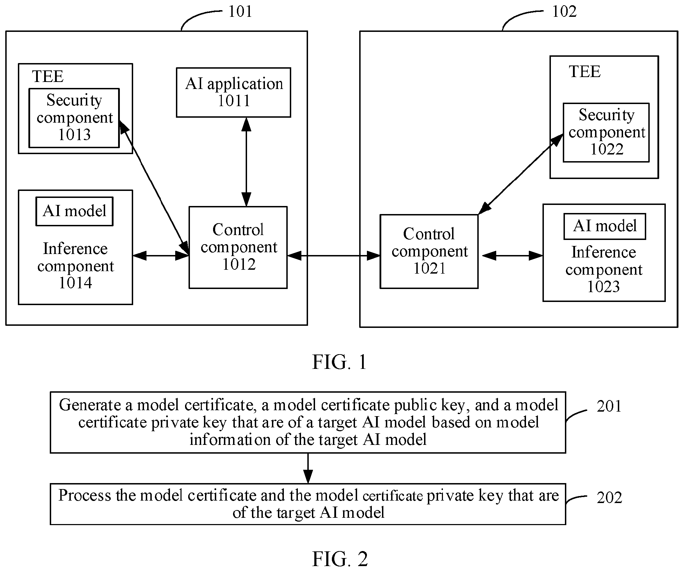

FIG. 1 is a diagram of a system architecture related to a model invoking method according to an embodiment of this application. As shown in FIG. 1, this system includes a first device 101 and a second device 102. The first device 101 is a device deployed with an AI application, and the second device 102 is a device that provides a target AI model. A communication connection may be established between the first device 101 and the second device 102.

As shown in FIG. 1, an AI application 1011 is deployed in the first device 101, and the first device 101 may further include a control component 1012, a security component 1013 running in a TEE, and an inference component 1014. The control component 1012 may separately interact with the security component 1013 and the inference component 1014. In addition, the AI application 1011 may communicate with the control component 1012.

The second device 102 stores a model file of the target AI model, and the second device 102 may also include a control component 1021, a security component 1022 running in the TEE, and an inference component 1023. In addition, the control component 1021 in the second device may also interact with the security component 1022 and the inference component 1023. The first device 101 and the second device 102 may interact with each other via respective control components.

It should be noted that the control component 1012 of the first device may provide an API interface, the AI application 1011 may perform model invoking through the API interface provided by the control component 1012, and the control component 1012 includes logic code applicable to different hardware architectures.

In a possible implementation, the AI application in the first device 101 may invoke an AI model in a local invoking manner. In other words, the second device 102 may deploy, to the first device 101 in advance, the target AI model required by the AI application 1011. When the AI application 1011 needs to invoke the target AI model, the AI application 1011 may send a model invoking request to the control component 1012. After receiving the model invoking request sent by the AI application 1011, the control component 1012 may verify model use permission of the AI application based on a model identifier of the target AI model and a permission verification parameter of the AI application that are included in the model invoking request. When the verification succeeds, the control component 1012 may send an encrypted model file to the security component 1013. After receiving the encrypted model file sent by the control component, the security component 1013 decrypts the encrypted model file.

Then, the security component 1013 may send a decrypted model file to the control component 1012. After receiving the decrypted model file, the control component 1012 sends the decrypted model file and inference data to the inference component 1014. After receiving the decrypted model file and the inference data that are sent by the control component 1012, the inference component 1014 loads the decrypted model file, to run the target AI model, to process the inference data by using the target AI model, to obtain an inference result. Then, the inference component 1014 may send the inference result of the target AI model to the control component 1012, and then the control component 1012 feeds back the inference result to the AI application 1011.

In another possible implementation, the AI application in the first device 101 may invoke an AI model in a remote invoking manner. In other words, the second device 102 may not deploy, to the first device 101, the target AI model that requires to be invoked by the AI application 1011. When the AI application 1011 needs to invoke the target AI model, the AI application 1011 may send a model invoking request to the control component 1012. After receiving the model invoking request sent by the AI application 1011, the control component 1012 sends the received model invoking request to the control component 1021. After receiving the model invoking request, the control component 1021 verifies model use permission of the AI application based on a model identifier of the target AI model and a permission verification parameter. When the verification succeeds, the control component 1021 may send inference data to the inference component 1023. After receiving the inference data sent by the control component 1021, the inference component 1023 processes the inference data by using the running target AI model, to obtain an inference result. Then, the inference result is sent to the control component 1021. After receiving the inference result, the control component 1021 sends the inference result to the control component 1012, and then the control component 1012 feeds back the inference result to the AI application 1011.

It should be noted that, if the AI application in the first device 101 invokes the AI model in the remote invoking manner, the first device 101 may alternatively not include the inference component 1014. If the AI application in the first device 101 invokes the AI model in the local invoking manner, the second device 102 may alternatively not include the inference component 1023. This is not limited in this embodiment of this application.

In addition, division of the components in the first device and the second device merely represents logical division, and does not impose any limitation on physical implementation of the components. For example, the control component and the inference component in either of the foregoing devices may be two different applications or different processes in the device. Optionally, the control component and the inference component in either of the foregoing devices may alternatively be two different threads in a same process. This is not limited in this embodiment of this application. In addition, the security component in either of the foregoing devices may be a security application running in the TEE in the device.

It should be further noted that the first device may be a terminal device, or may be a server configured to provide an AI application service. When the first device is the server, the first device may be a server of a cloud service center. The second device may be a server configured to provide the AI model.

In this embodiment of this application, the first device and the second device may store a plurality of types of password information, and the first device or the second device may protect and verify the target AI model based on the stored password information. For example, both the first device and the second device include a device root key. The device root key is unique, in other words, one device has one device root key, and the device root key is stored in a TEE of a corresponding device. Each device further stores a device certificate. The device certificate may be a self-signed certificate, or may be a certificate signed by a certificate authority (certificate authority, CA). This is not limited in this embodiment of this application. The device certificate includes a device certificate public key, and a device certificate private key corresponding to the device certificate public key may be encrypted by using the device root key of the corresponding device and then stored in the corresponding device.

In this embodiment of this application, after developing an AI model, the second device that provides the target AI model may generate a model certificate for the AI model, to perform cryptographic processing on the AI model based on the model certificate in a subsequent invoking process, thereby ensuring security of the AI model. The following describes a model certificate generation and processing method of the AI model.

FIG. 2 is a flowchart of a model certificate generation and processing method according to an embodiment of this application. The method may be applied to the second device described above. The following describes a process by using an example in which the second device generates a model certificate of a target AI model. As shown in FIG. 2, the process includes the following steps.

Step 201: Generate the model certificate, a model certificate public key, and a model certificate private key that are of the target AI model based on model information of the target AI model.

It can be learned from the foregoing descriptions that the second device includes a control component and a security component running in a TEE. Based on this, the control component in the second device may generate the model certificate of the target AI model and the model certificate public key and the model certificate private key that are of the target AI model based on the model information of the target AI model. For ease of description, the model certificate private key of the target AI model is referred to as a first private key. The model information of the target AI model may include parameters related to the target AI model, an algorithm file of the target AI model, and a model identifier of the target AI model.

Step 202: Process the model certificate and the model certificate private key that are of the target AI model.

After generating the model certificate public key of the target AI model, the first private key, and the model certificate of the target AI model, the control component may send, to the security component, the generated model certificate of the target AI model, the generated first private key, and a device certificate private key that is of the second device and that is encrypted by using a device root key of the second device, so that the security component processes the model certificate of the target AI model and the first private key. For ease of description, the device certificate private key of the second device is referred to as a third private key.

It can be learned from the foregoing descriptions that the third private key is encrypted by using the device root key of the second device for storage, and the device root key of the second device is stored in the TEE. Based on this, after receiving the model certificate, the first private key, and the third private key that are sent by the control component, the security component first obtains the device root key that is of the second device and that is stored in the TEE. After obtaining the device root key of the second device, the security component decrypts the third private key by using the device root key of the second device. Then, the security component performs digital signing on the model certificate of the target AI model by using a third private key obtained through decryption, and encrypts the first private key by using the third private key. A model certificate that is of the target AI model and on which digital signing is performed by using the third private key, and a first private key encrypted by using the third private key are sent to the control component. The control component may store, in a storage device for subsequent use, the signed model certificate of the target AI model and the encrypted first private key.

Optionally, in some possible implementations, after obtaining the device root key of the second device, the security component may directly encrypt the first private key by using the device root key of the second device, and decrypt the third private key by using the device root key of the second device. Subsequently, digital signing is performed on the model certificate of the target AI model by using the third private key. Then, the model certificate that is of the target AI model and on which digital signing is performed by using the third private key, and the first private key encrypted by using the device root key of the second device are sent to the control component. The control component may store, in the storage device for subsequent use, the signed model certificate of the target AI model and the encrypted first private key.

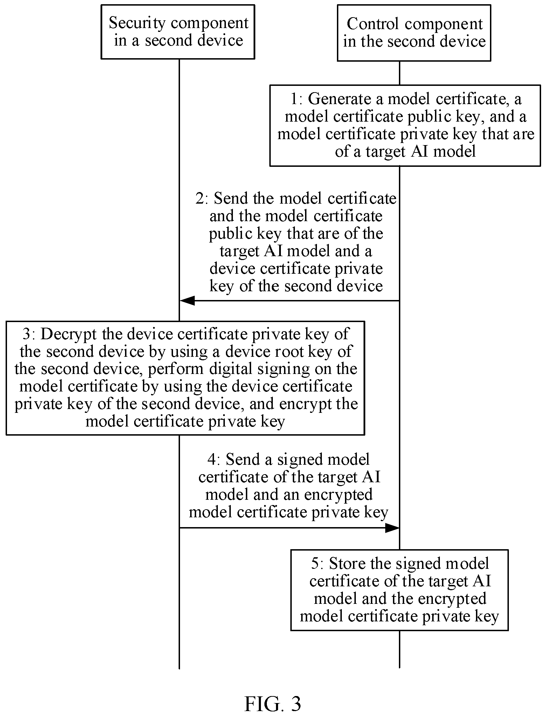

For example, FIG. 3 is a flowchart of generating another model certificate according to an embodiment of this application. Refer to FIG. 3. A procedure of generating the model certificate includes the following steps.
1: A control component generates a model certificate, a model certificate public key, and a model certificate private key that are of a target AI model.
2: The control component sends the generated model certificate and the generated model certificate public key that are of the target AI model, and a device certificate private key of a second device to a security component.
3: The security component decrypts the device certificate private key of the second device by using a device root key of the second device, performs digital signing on the model certificate of the target AI model by using a device certificate private key that is of the second device and that is obtained through decryption, and encrypts the model certificate private key by using the device certificate private key of the second device.
4: The security component sends a signed model certificate of the target AI model and an encrypted model certificate private key to the control component.
5: The control component receives and stores the signed model certificate of the target AI model and the encrypted model certificate private key.

In this embodiment of this application, before an AI application in the first device invokes the target AI model, the AI application may first apply for use permission of an AI model. It can be learned from the foregoing descriptions that the AI application in the first device invokes the AI model in two different invoking manners. When the different invoking manners are used, methods for permission application of the AI application are also different. Based on this, the following first describes a method for permission application of the AI application when a local invoking manner is used.

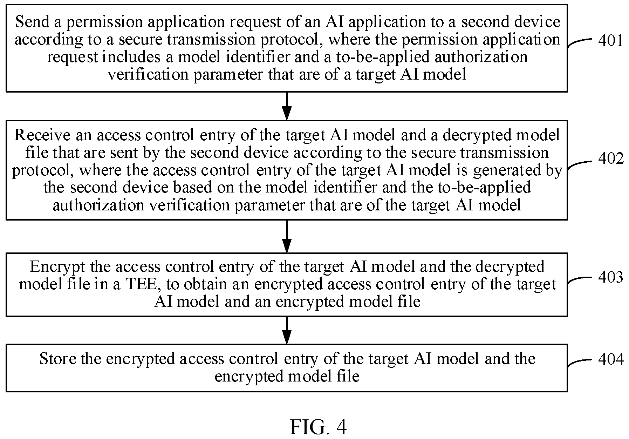

FIG. 4 is a flowchart of a method of permission application of an AI application during local invoking according to an embodiment of this application. An example in which an AI application in a first device applies for use permission of a target AI model is used for description. Refer to FIG. 4. The method includes the following steps.

Step 401: Send a permission application request of the AI application to a second device according to a secure transmission protocol, where the permission application request includes a model identifier and a to-be-applied authorization verification parameter that are of the target AI model.

In this embodiment of this application, a control component in the first device may establish a communication connection to a control component in the second device according to the secure transmission protocol. Then, the control component in the first device may send the permission application request of the AI application to the control component in the second device according to the secure transmission protocol. The permission application request includes the model identifier and the to-be-applied authorization verification parameter that are of the target AI model.

The secure transmission protocol may be the hypertext transfer protocol secure (hypertext transfer protocol secure, HTTPS), the transport layer security (transport layer security, TLS), or another secure transmission protocol. This is not limited in this embodiment of this application. After the control component in the first device establishes the communication connection to the control component in the second device according to the secure transmission protocol, it can be ensured that the first device is a valid device that can apply for use permission.

It should be noted that the control component in the first device may provide an API interface, and the AI application may send an initial permission application request to the control component in the first device through the API interface. The initial permission application request includes the model identifier of the to-be-invoked target AI model of the AI application and an invoking time period. After the control component in the first device receives the initial permission application request sent by the AI application, the control component may extract a device identifier of the first device. The device identifier of the first device may be a physical identifier that uniquely identifies the first device, for example, a device code or a device bar code. The device identifier of the first device may alternatively be an internet protocol (internet protocol, IP) address currently used by the first device. In this way, the control component may add the extracted device identifier of the first device to the initial permission application request. Then, the control component may generate the permission application request of the AI application based on the model identifier of the target AI model, the invoking time period, and the device identifier of the first device. The permission application request includes the model identifier and the to-be-applied authorization verification parameter that are of the target AI model. The to-be-applied authorization verification parameter includes the invoking time period and the device identifier of the first device.

Optionally, in some possible implementations, the initial permission application request sent by the AI application to the control component in the first device may further include an application identifier of an AI application. In this case, a finally-generated permission application request may include the model identifier of the target AI model, the invoking time period, the application identifier of the AI application, and the device identifier of the first device. Certainly, the foregoing are several possible parameters in the permission application request provided in this embodiment of this application. In actual application, based on a permission control need of the second device, the permission application request may alternatively include another type of parameter. This is not limited in this embodiment of this application.

After the permission application request of the AI application is generated, the control component in the first device may send the permission application request of the AI application to the control component in the second device according to the secure transmission protocol.

Step 402: Receive an access control entry of the target AI model and a decrypted model file that are sent by the second device according to the secure transmission protocol, where the access control entry of the target AI model is generated by the second device based on the model identifier and the to-be-applied authorization verification parameter that are of the target AI model.

In this embodiment of this application, after receiving the permission application request of the AI application, the control component in the second device may generate the access control entry of the target AI model based on the model identifier and the to-be-applied authorization verification parameter that are of the target AI model and that are included in the permission application request. Then, the second device may send the access control entry of the target AI model and the decrypted model file to the first device according to the secure transmission protocol. Correspondingly, the first device receives the access control entry of the target AI model and the decrypted model file that are sent by the second device. The decrypted model file is a plaintext model file of the to-be-invoked target AI model.

For example, it can be learned from the foregoing descriptions that the to-be-applied authorization verification parameter in the permission application request may include the invoking time period and the device identifier of the first device. Based on this, after receiving the permission application request of the AI application, the control component in the second device may generate an authorization random number. Then, the control component in the second device may correspondingly store the model identifier of the target AI model, the invoking time period, the device identifier of the first device, and the authorization random number that are included in the permission application request, to obtain the access control entry of the target AI model. In this case, the invoking time period included in the access control entry is an authorized time period authorized by the second device, and the device identifier of the first device is an identifier of an authorized device that is authorized by the second device and that is allowed to use the target AI model. It can be learned that an access control entry that is of an AI model and that is generated by the second device may include a model identifier of the AI model, an authorized time period, an identifier of an authorized device, and an authorization random number.

It should be noted that before sending the access control entry of the target AI model and the decrypted model file to the first device, the second device may further perform digital signing on the access control entry of the target AI model and the decrypted model file.

For example, after generating the access control entry of the target AI model, the control component in the second device may send, to a security component in the second device for digital signing, the access control entry of the target AI model, the decrypted model file, and a first private key encrypted by using a third private key. It can be learned from the foregoing descriptions that the third private key is encrypted by using a device root key of the second device and is stored in the second device, and the device root key of the second device is stored in a TEE of the second device. Based on this, after the security component receives the access control entry, the decrypted model file, and the first private key encrypted by using the third private key that are sent by the control component, the security component first obtains the device root key stored in the TEE, and then decrypts the third private key by using the device root key. Then, the encrypted first private key is decrypted by using the third private key, to obtain a decrypted first private key. After obtaining the decrypted first private key, the security component may perform digital signing on the received access control entry of the target AI model by using the decrypted first private key, to obtain an access control entry that is of the target AI model and that includes first signature information. The security component may further perform digital signing on the decrypted model file by using the first private key, to obtain a decrypted model file that includes second signature information.

Optionally, if the third private key is encrypted by using the device root key of the second device, after the security component receives the access control entry, the decrypted model file, and the first private key encrypted by using the device root key of the second device that are sent by the control component, the security component first obtains the device root key stored in the TEE, and then decrypts the first private key by using the device root key. After obtaining the decrypted first private key, the security component may perform digital signing on the access control entry of the target AI model and the decrypted model file with reference to the foregoing method, to obtain the access control entry that is of the target AI model and that includes the first signature information and the decrypted model file that includes the second signature information. This is not limited in this embodiment of this application.

Then, the security component in the second device may send the access control entry that is of the target AI model and that includes the first signature information and the decrypted model file that includes the second signature information to the control component in the second device, and the control component in the second device sends the foregoing information to the control component in the first device.

Because both the access control entry of the target AI model and the decrypted model file that are sent by the control component in the second device to the control component in the first device have signature information, to ensure that the control component in the first device can verify the received access control entry of the target AI model and the received decrypted model file in a subsequent invoking process, the control component in the second device may further send a device certificate of the second device and a model certificate of the target AI model to the control component in the first device. After receiving the foregoing information sent by the control component in the second device, the control component in the first device may first verify the model certificate of the target AI model, to check whether the model certificate of the target AI model has been tampered with. It can be learned from the foregoing descriptions that digital signing is performed on the model certificate of the target AI model by using the third private key (that is, a device certificate private key of the second device), and the device certificate of the second device includes a device certificate public key. Based on this, when verifying the model certificate of the target AI model, the control component in the first device may verify the model certificate by using the device certificate public key included in the device certificate of the second device. After the verification succeeds, it indicates that the model certificate of the target AI model is not tampered with, and the control component in the first device stores the model certificate of the target AI model. Then, the control component in the first device may send the received access control entry that includes the first signature information and the received decrypted model file that includes the second signature information to a security component in the first device to apply for encryption.

Step 403: Encrypt the access control entry of the target AI model and the decrypted model file in the TEE, to obtain an encrypted access control entry of the target AI model and an encrypted model file.

For example, the security component in the first device may encrypt the access control entry that includes the first signature information and the decrypted model file that includes the second signature information by using a device root key of the first device, to obtain the encrypted access control entry of the target AI model and the encrypted model file. Then, the security component in the first device sends the encrypted access control entry and the encrypted model file to the control component in the first device.

Step 404: Store the encrypted access control entry of the target AI model and the encrypted model file.

After receiving the encrypted access control entry and the encrypted model file that are sent by the security component, the control component in the first device may store the received encrypted access control entry and the received encrypted model file in a storage device for subsequent use.

It should be noted that, before invoking the target AI model, each of Al applications may apply for permission by using the method described above, to obtain encrypted access control entries. These encrypted access control entries form encrypted access control information.

In this embodiment of this application, the first device may send the permission application request of the AI application to the second device according to the secure transmission protocol, and receive the access control entry of the target AI model and the decrypted model file that are sent by the second device according to the secure transmission protocol. In this way, use permission of the AI application can be subsequently verified based on the access control entry, to ensure that the AI application is a valid application that has the model use permission.

In addition, after receiving the access control entry of the target AI model and the decrypted model file that are sent by the second device, the first device directly encrypts the access control entry and the decrypted model file in the TEE. This can prevent the access control entry from being tampered with, and the first device cannot obtain plaintext of the decrypted model file, thereby effectively ensuring security of the model file.

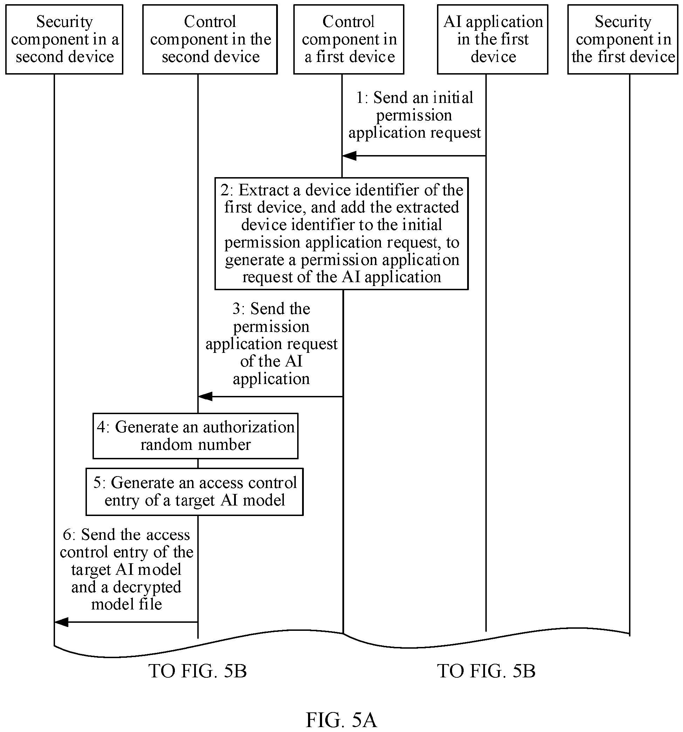

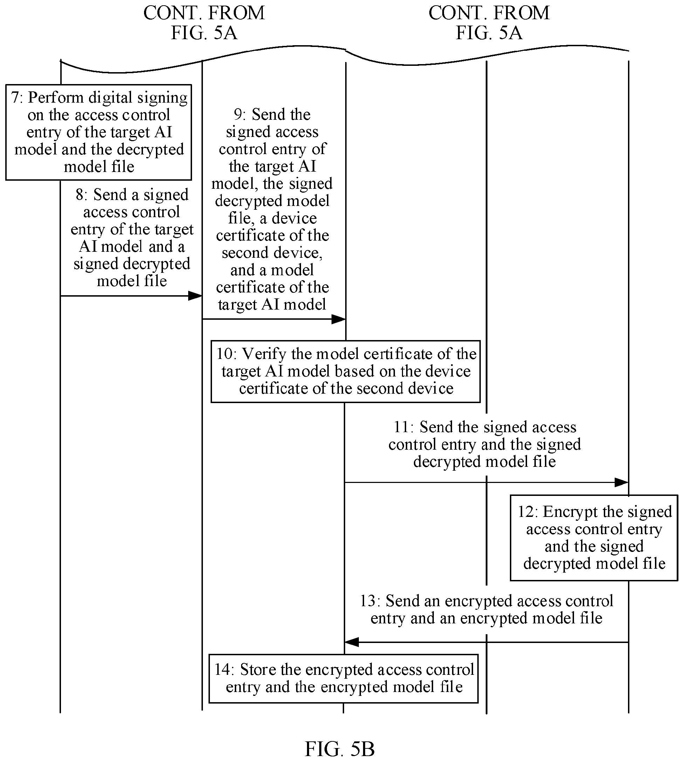

FIG. 5A and FIG. 5B are another flowchart of a permission application request of an AI application during local invoking according to an embodiment of this application. Refer to FIG. 5A and FIG. 5B. This procedure includes the following steps.
1: The AI application sends an initial permission application request to a control component in a first device, where the initial permission application request includes a model identifier of a target AI model and an invoking time period.
2: The control component in the first device extracts a device identifier of the first device, and adds the extracted device identifier of the first device to the initial permission application request, to generate the permission application request of the AI application.
3: The control component in the first device sends the permission application request of the AI application to a control component in a second device.
4: The control component in the second device receives the permission application request of the AI application, and generates an authorization random number.
5: The control component in the second device generates an access control entry of the target AI model based on the permission application request and the authorization random number.
6: The control component in the second device sends the access control entry of the target AI model and a decrypted model file to a security component in the second device.
7: The security component in the second device performs digital signing on the access control entry of the target AI model and the decrypted model file.
8: The security component in the second device sends a signed access control entry of the target AI model and a signed decrypted model file to the control component in the second device.
9: The control component in the second device sends the signed access control entry of the target AI model, the signed decrypted model file, a device certificate of the second device, and a model certificate of the target AI model to the control component in the first device.
10: The control component in the first device verifies the model certificate of the target AI model based on the device certificate of the second device.
11: The control component in the first device sends the signed access control entry and the signed decrypted model file to a security component in the first device.
12: The security component in the first device encrypts the signed access control entry and the signed decrypted model file.
13: The security component in the first device sends an encrypted access control entry and an encrypted model file to the control component in the first device.
14: The control component in the first device stores the received encrypted access control entry and the received encrypted model file in a storage device.

After permission application for the target AI model is performed by using the method described in FIG. 4, or FIG. 5A and FIG. 5B, the AI application in the first device may locally invoke the target AI model by using the method described below.

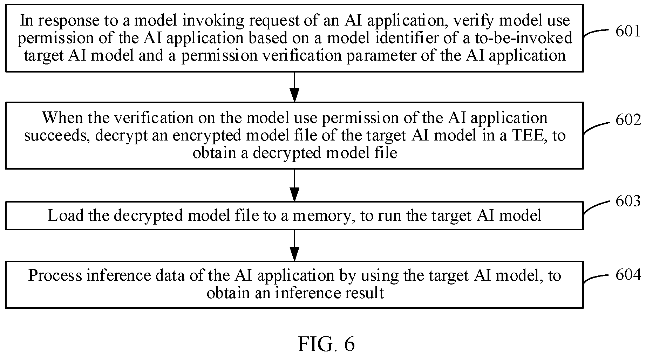

FIG. 6 is a flowchart of a local model invoking method according to an embodiment of this application. The method may be applied to the first device described above, and an AI application is deployed in the first device. Refer to FIG. 6. The method includes the following steps.

Step 601: In response to a model invoking request of the AI application, verify model use permission of the AI application based on a model identifier of a to-be-invoked target AI model and a permission verification parameter of the AI application.

In this embodiment of this application, the AI application is deployed in the first device, and the first device may further include a control component, a security component, and an inference component. The control component in the first device may provide an API interface. Based on this, the AI application may send the model invoking request to the control component by invoking the API interface provided by the control component. The model invoking request includes the model identifier of the target AI application, the permission verification parameter of the AI application, and inference data.

The control component in the first device may receive the model invoking request of the AI application, and further verify the model use permission of the AI application based on the model identifier of the to-be-invoked target AI model and the permission verification parameter of the AI application.

It should be noted that the first device stores encrypted access control information, and the access control information includes at least one access control entry of an AI model. In this embodiment of this application, at least one means one or more, and the at least one access control entry of the AI model is an access control entry of an AI model for which the AI application in the first device has applied for use permission. For example, the at least one access control entry of the AI model may be obtained by the AI application in the first device by using the permission application method shown in FIG. 4, or FIG. 5A and FIG. 5B.

Based on this, the control component in the first device may first decrypt the encrypted access control information in a TEE, to obtain decrypted access control information. Then, the model use permission of the AI application is verified based on the model identifier of the target AI model, the permission verification parameter, and the decrypted access control information.

The access control information includes the at least one access control entry of the AI model, and each access control entry is encrypted by using a root key of the first device. Based on this, the control component in the first device first sends the encrypted access control information to the security component. After receiving the encrypted access control information, the security component obtains the root key that is of the first device and that is stored in the TEE, and then decrypts, by using the root key of the first device, each access control entry that is of the AI model and that is included in the access control information, to obtain the decrypted access control information. Then, the security component sends the decrypted access control information to the control component.

After receiving the decrypted access control information, the control component may obtain an access control entry of the target AI model from the decrypted access control information based on the model identifier of the target AI model; search the access control entry of the target AI model for a first access control entry in which an included authorization verification parameter matches the permission verification parameter; and when the first access control entry is found, determine that the verification on the model use permission of the AI application succeeds. The permission verification parameter includes at least one of a device identifier of the first device, invoking time, and an application identifier of the AI application.

For example, each access control entry that is of the AI model and that is included in the decrypted access control information may include a model identifier of the corresponding AI model, an identifier of an authorized device, an authorized time period, and an authorization random number. The permission verification parameter may include the device identifier of the first device and the invoking time. The control component may first compare the model identifier of the target AI model with model identifiers that are of the AI model and that are in decrypted access control entries, to obtain, from the decrypted access control entries, an access control entry that includes the model identifier of the target AI model, and use the obtained access control entry as the access control entry of the target AI model. It should be noted that in this embodiment of this application, there may be one or more obtained access control entries of the target AI model. When there are a plurality of access control entries of the target AI model, the plurality of access control entries of the target AI model may be applied for by a plurality of different AI applications in the first device. In this way, the plurality of access control entries of the target AI model each include an application identifier of a corresponding AI application. Alternatively, the plurality of access control entries of the target AI model may be applied for by an AI application in the first device, but authorized time periods or other parameters included in the access control entries are different. This is not limited in this embodiment of this application.

After obtaining the access control entry of the target AI model, for any access control entry of the target AI model, the control component may compare the device identifier that is of the first device and that is in the permission verification parameter with an identifier that is of an authorized device and that is included in the access control entry, and compare the invoking time in the permission verification parameter with an authorized time period in the access control entry, to determine whether an access control entry in which an included identifier of an authorized device is the identifier of the first device and an included authorized time period is the invoking time exists in the access control entry of the target AI model, that is, whether the first access control entry exists. If the first access control entry is found in the access control entry of the target AI model, it indicates that the verification on the model use permission of the AI application succeeds. If the first access control entry is not found, it indicates that the verification on the model use permission of the AI application fails, and the entire procedure ends.

It should be noted that, it can be learned from the foregoing descriptions that the access control entry of the target AI model further includes first signature information, and the first signature information is obtained by a second device by performing digital signing on the access control entry of the target AI model. Based on this, before the access control entry of the target AI model is searched for the first access control entry, the first signature information may be further verified. When the verification on the first signature information succeeds, the step of searching the access control entry of the target AI model for the first access control entry in which the included authorization verification parameter matches the permission verification parameter is performed.

For example, it can be learned from the foregoing descriptions that the first signature information is obtained by performing digital signing on the access control entry of the target AI model by using a first private key (that is, a model certificate private key of the target AI model). In addition, in step 402, after receiving a model certificate that is of the target AI model and that is sent by a control component in the second device, the control component in the first device has verified the model certificate, and determines that the model certificate has not been tampered with. In this case, a model certificate public key included in the model certificate has also not been tampered with. In this way, after receiving a decrypted access control entry that is of the target AI model and that is sent by the security component, the control component in the first device may further verify the first signature information by using the model certificate public key included in the model certificate. When the verification on the first signature information succeeds, it indicates that the access control entry has not been tampered with. In this case, the step of searching the access control entry of the target AI model for the first access control entry in which the included authorization verification parameter matches the permission verification parameter is performed, to ensure accuracy of a permission verification result subsequently obtained based on the access control entry.

Step 602: When the verification on the model use permission of the AI application succeeds, decrypt an encrypted model file of the target AI model in the TEE, to obtain a decrypted model file.

In this embodiment of this application, when the verification on the model use permission of the AI application succeeds, the control component in the first device may send the encrypted model file of the target AI model to the security component. After receiving the encrypted model file sent by the control component, the security component may decrypt the encrypted model file of the AI model in the TEE, to obtain the decrypted model file; and send the decrypted model file to the control component.

For example, it can be learned from the foregoing descriptions that a model file of the target AI model is encrypted by a root key of the first device. Based on this, after receiving the encrypted model file sent by the control component, the security component may obtain a device root key stored in the TEE; decrypt the encrypted model file by using the obtained device root key, to obtain the decrypted model file; and send the decrypted model file to the control component. Correspondingly, the control component receives the decrypted model file sent by the security component.

Step 603: Load the decrypted model file to a memory, to run the target AI model.

After obtaining the decrypted model file, the control component may send the decrypted model file to the inference component. After receiving the decrypted model file, the inference component loads the decrypted model file to the memory, to run the target AI model.

It should be noted that, it can be learned from the descriptions of the foregoing embodiment that the decrypted model file sent by the second device to the first device includes second signature information, and the second signature information is obtained by the second device by performing digital signing on the decrypted model file.

In this case, before the decrypted model file is loaded to the memory, the second signature information may be further verified. When the verification on the second signature information succeeds, the step of loading the decrypted model file to the memory is performed.

For example, it can be learned from the foregoing descriptions that the second signature information is obtained by the second device by performing digital signing on the decrypted model file by using the first private key (that is, the model certificate private key of the target AI model). In this case, the control component may verify the second signature information by using the model certificate public key included in the model certificate of the target AI model. If the verification on the second signature information succeeds, it indicates that the model file has not been tampered with. In this case, the step of loading the decrypted model file to the memory is performed. If the verification on the second signature information fails, it indicates that the model file may have been tampered with, and the step of loading the decrypted model file to the memory is not performed.

Step 604: Process the inference data of the AI application by using the target AI model, to obtain an inference result.

In this embodiment of this application, when the AI application sends the model invoking request to the control component in step 601, the model invoking request includes the inference data. When the verification on the model use permission of the AI application succeeds, the control component may send the inference data to the inference component. After receiving the inference data, the inference component may perform an inference operation on the inference data by using the target AI model, to obtain the inference result. Then, the inference component may send the inference result to the control component, and the control component feeds back the inference result to the AI application.

Optionally, in another possible implementation, the model invoking request sent by the AI application in step 601 may alternatively not include the inference data. In this case, after the verification on the model use permission of the AI application succeeds, the control component may send, to the AI application, a message indicating that the verification on the model use permission succeeds. After receiving the message indicating that the verification on the model use permission succeeds, the AI application sends the inference data to the control component. Then, the control component sends the inference data to the inference component.

Optionally, after the control component feeds back the inference result to the AI application, if the control component detects that the AI application stops running, the control component may delete the decrypted model file from the memory.

For example, the control component may send, to the inference component, a deletion command for deleting the decrypted model file. After receiving the deletion command, the inference component may stop running of the target AI model, and delete the decrypted model file from the memory.

In this embodiment of this application, the first device may verify the model use permission of the AI application based on the model identifier of the to-be-invoked target AI model and the permission verification parameter of the AI application. The permission verification parameter includes verification parameters in a plurality of dimensions, for example, the device identifier and the invoking time. In this way, fine-grained access permission control can be performed on the first device, to ensure that the AI application in the first device invokes the target AI model validly. When the verification on the model use permission of the AI application succeeds, the first device may decrypt the encrypted model file of the target AI model in the TEE, to obtain the decrypted model file; directly load the decrypted model file to the memory, to run the target AI model; and further process the inference data of the AI application by using the target AI model, to obtain the inference result. In this way, in the entire process, the decrypted model file of the target AI model is stored in the memory, in other words, the decrypted model file of the target AI model is not flushed to disk, and another device cannot access the decrypted model file. This effectively ensures secure application of the target AI model.

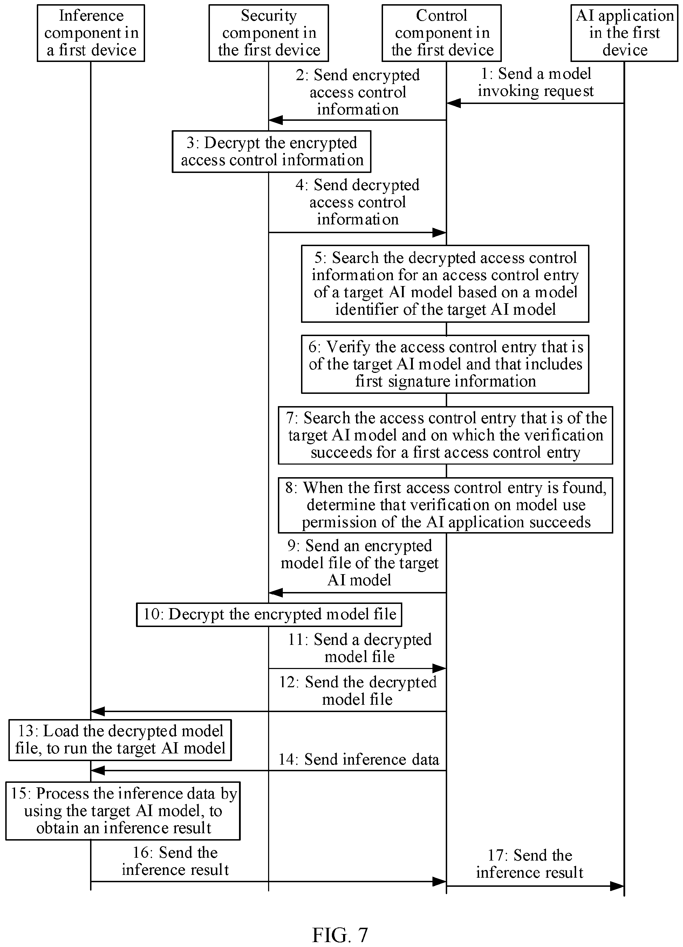

Based on the invoking method shown in FIG. 6, an embodiment of this application provides an implementation procedure in which components in a first device interact with each other to implement local model invoking. Refer to FIG. 7. The procedure includes the following steps.
1: An AI application sends a model invoking request to a control component in the first device.
2: The control component in the first device sends encrypted access control information to a security component.
3: The security component decrypts the encrypted access control information.
4: The security component sends decrypted access control information to the control component.
5: The control component searches the decrypted access control information for an access control entry of a target AI model based on a model identifier that is of the target AI model and that is included in the model invoking request.
6: The control component verifies the access control entry that is of the target AI model and that includes first signature information.
7: The control component searches the access control entry that is of the target AI model and on which the verification succeeds for a first access control entry in which an included authorization verification parameter matches a permission verification parameter in the model invoking request.
8: When the first access control entry is found, determine that verification on model use permission of the AI application succeeds.
9: The control component sends an encrypted model file of the target AI model to the security component.
10: The security component decrypts the encrypted model file.
11: The security component sends a decrypted model file to the control component.
12: The control component sends the decrypted model file to an inference component.
13: The inference component loads the decrypted model file, to run the target AI model.
14: The control component sends inference data of the AI application to the inference component.
15: The inference component processes the inference data by using the target AI model, to obtain an inference result.
16: The inference component sends the inference result to the control component.
17: The control component sends the inference result to the AI application.

Optionally, in another possible implementation, the step of decrypting the access control information and the steps of decrypting the model file, and loading the model file to the memory for running may alternatively be performed when the AI application is initialized or the control component is started. For the step of decrypting the access control information, refer to step 601. For the steps of decrypting the model file, and loading the model file to the memory for running, refer to step 602 and step 603. This is not limited in this embodiment of this application. In this case, after receiving the model invoking request of the AI application, the control component may verify, by using the method described in step 601, the permission verification parameter carried in the model invoking request. When the verification on the permission verification parameter succeeds, the control component processes the inference data by using the method described in step 604, and then feeds back the inference result to the AI application.

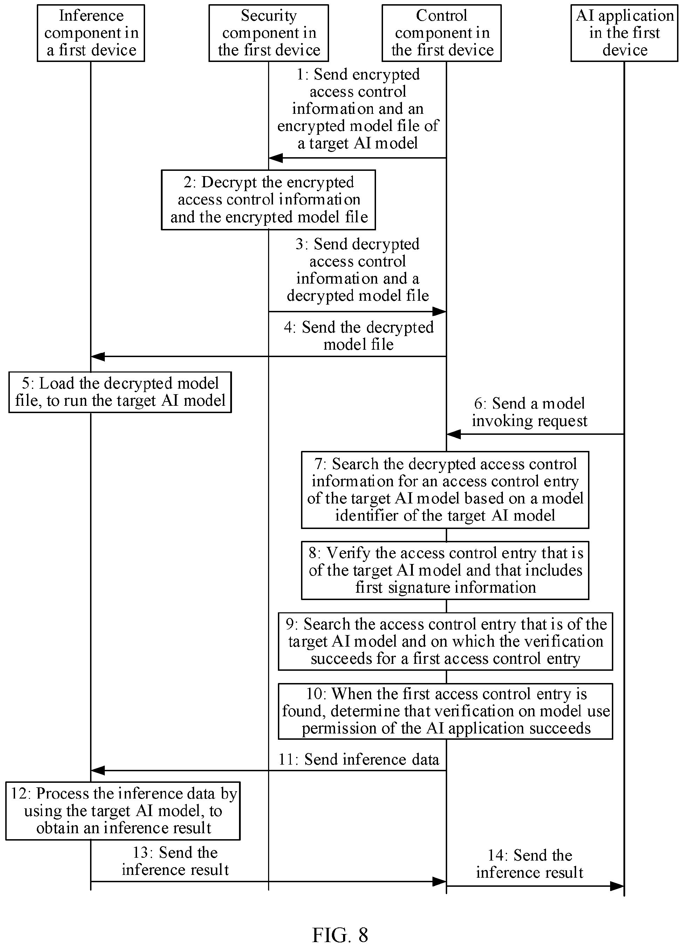

Based on this, FIG. 8 is another implementation procedure in which components in a first device interact with each other to implement local model invoking according to an embodiment of this application. Refer to FIG. 8. The procedure includes the following steps.
1: A control component sends encrypted access control information and an encrypted model file of a target AI model to a security component.
2: The security component decrypts the encrypted access control information and the encrypted model file.
3: The security component sends decrypted access control information and a decrypted model file to the control component.
4: The control component sends the decrypted model file to an inference component.
5: The inference component loads the decrypted model file, to run the target AI model.
6: An AI application sends a model invoking request to the control component in the first device.
7: The control component searches the decrypted access control information for an access control entry of the target AI model based on a model identifier that is of the target AI model and that is included in the model invoking request.
8: The control component verifies the access control entry that is of the target AI model and that includes first signature information.
9: The control component searches the access control entry that is of the target AI model and on which the verification succeeds for a first access control entry in which an included authorization verification parameter matches a permission verification parameter in the model invoking request.
10: When the first access control entry is found, determine that verification on model use permission of the AI application succeeds.
11: The control component sends inference data of the AI application to the inference component.
12: The inference component processes the inference data by using the target AI model, to obtain an inference result.
13: The inference component sends the inference result to the control component.
14: The control component sends the inference result to the AI application.

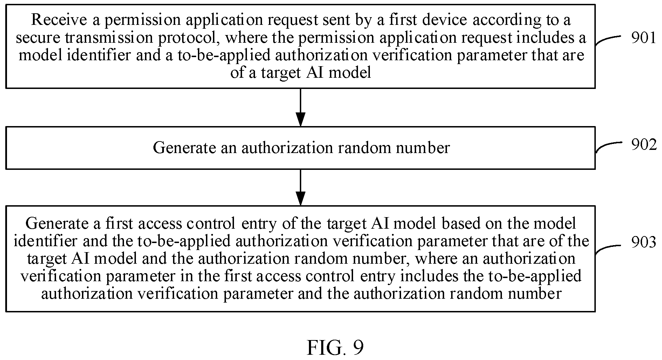

FIG. 4 to FIG. 8 mainly describe, when the local invoking manner is used, an implementation process in which the AI application applies for the model use permission of the target AI model and invokes the model. It can be learned from the foregoing descriptions that in some possible implementations, the AI application may further invoke the target AI model by using a remote invoking method. The following describes a method in which the AI application applies for the model use permission of the target AI model before remote invoking. Refer to FIG. 9. The method is applied to a second device, and the method includes the following steps.

Step 901: Receive a permission application request sent by a first device according to a secure transmission protocol, where the permission application request includes a model identifier and a to-be-applied authorization verification parameter that are of a target AI model.

In this embodiment of this application, an AI application is deployed in the first device, and the target AI model is run on the second device. Before the AI application invokes the target AI model in the second device, the first device may send the permission application request of the AI application to the second device according to the secure transmission protocol. Correspondingly, the second device receives the permission application request sent by the first device. The permission application request includes the model identifier and the to-be-applied authorization verification parameter that are of the target AI model that needs to be invoked by the AI application, to implement service logic. For descriptions of the secure transmission protocol, refer to step 401. This is not limited in this embodiment of this application.

For example, a control component in the first device may provide an APIinterface, and the AI application may send an initial permission application request to the control component in the first device through the API interface. The initial permission application request may include the model identifier of the target AI model and an invoking time period. After the control component in the first device receives the initial permission application request sent by the AI application, the control component may extract a device identifier of the first device, and add the device identifier of the first device to the initial permission application request, to obtain the permission application request of the AI application. In this case, the permission application request includes the model identifier and the to-be-applied authorization verification parameter that are of the target AI model. The to-be-applied authorization verification parameter includes the invoking time period and the device identifier of the first device. Then, the control component in the first device may send the permission application request to a control component in the second device according to the secure transmission protocol, and the control component in the second device receives the permission application request.

For another possible implementation of the permission application request of the AI application, refer to the method described in step 401. This is not limited in this embodiment of this application.

Step 902: Generate an authorization random number.

After receiving the permission application request, the control component in the second device may generate the authorization random number.

Step 903: Generate a first access control entry of the target AI model based on the model identifier and the to-be-applied authorization verification parameter that are of the target AI model and the authorization random number, where an authorization verification parameter in the first access control entry includes the to-be-applied authorization verification parameter and the authorization random number.

For example, after generating the authorization random number, the control component in the second device may generate the first access control entry of the target AI model based on the model identifier and the to-be-applied authorization verification parameter that are of the target AI model and the authorization random number. The authorization verification parameter in the first access control entry includes the to-be-applied authorization verification parameter and the authorization random number.

For example, when the to-be-applied authorization verification parameter includes the device identifier of the first device and the invoking time period, the first access control entry also includes the device identifier of the first device and the invoking time period. In this case, the device identifier of the first device is an identifier that is of an authorized device and that is in the first access control entry, and the invoking time period is an authorized time period in the first access control entry.

After generating the first access control entry of the target AI model, the second device may further perform digital signing on the first access control entry in a TEE, to obtain a signed first access control entry. The signed first access control entry includes third signature information, and then the second device sends the signed first access control entry to the first device.

For example, the control component in the second device may send the first access control entry of the target AI model and a first private key to a security component. It can be learned from the foregoing descriptions that the first private key may be encrypted by using a third private key, or may be encrypted by using a device root key of the second device. Based on this, if the first private key is encrypted by using the third private key, it can be learned from the foregoing descriptions that the third private key is encrypted by using the device root key of the second device, and the device root key of the second device is stored in the TEE. In this case, after receiving the first access control entry and the first private key that are sent by the control component, the security component first obtains the device root key that is of the second device and that is stored in the TEE, and then decrypts the third private key by using the device root key of the second device. Then, the first private key is decrypted by using a decrypted third private key, and digital signing is performed on the first access control entry of the target AI model by using a decrypted first private key, to obtain a signed first access control entry, where the signed first access control entry includes the third signature information. Then, the security component in the second device may send the signed first access control entry to the control component in the second device. After receiving the signed first access control entry, the control component in the second device sends the signed first access control entry to the control component in the first device.

Optionally, if the first private key is encrypted by using the device root key of the second device, after receiving the first access control entry and the first private key that are sent by the control component, the security component directly obtains the device root key that is of the second device and that is stored in the TEE, and then decrypts the first private key by using the device root key of the second device. Then, the security component may perform digital signing on the first access control entry of the target AI model with reference to the method described above, to obtain the first access control entry that includes the third signature information. Then, the security component in the second device may send the access control entry that includes the third signature information to the control component in the second device. For a specific sending process, refer to the foregoing described implementations. This is not limited in this embodiment of this application.

Optionally, in some possible cases, the second device may alternatively sign the authorization random number in the first access control entry, but does not sign another parameter. For an implementation of signing the authorization random number, refer to the foregoing implementation of signing the first access control entry. This is not limited in this embodiment of this application.

It can be learned from the foregoing descriptions that the signed first access control entry is obtained by performing digital signing by using the first private key, and the first private key is a model certificate private key of the target AI model. Based on this, to enable the first device to verify the signed first access control entry, when the signed first access control entry is sent to the first device, a device certificate that is of the second device and that is signed by using a second private key and a model certificate that is of the target AI model and that is signed by using the third private key may be further sent to the first device. The model certificate of the target AI model includes a model certificate public key of the target AI model. The second private key is a root certificate private key. The third private key is a device certificate private key of the second device.

For example, the second device may send, to the control component in the first device via the control component in the second device, the first access control entry signed by using the first private key, the device certificate that is of the second device and that is signed by using the second private key, and the model certificate that is of the target AI model and that is signed by using the third private key.

After receiving the signed first access control entry, the signed device certificate of the second device, and the signed model certificate of the target AI model, the control component in the first device first performs signature verification on the received model certificate of the target AI model, to determine whether the model certificate of the target AI model is tampered with. It can be learned from the foregoing descriptions that digital signing is performed on the model certificate of the target AI model by using the third private key. Based on this, when the signature verification is performed on the model certificate of the target AI model, signature verification may be first performed on the device certificate of the second device. Because digital signing is performed on the device certificate of the second device by using the second private key (that is, the root certificate private key), when the signature verification is performed on the device certificate of the second device, the signature verification may be performed on the device certificate of the second device by using a root certificate public key. A root certificate and the root certificate public key are preset in the first device and the second device in advance.

When the verification on the device certificate of the second device succeeds, it indicates that the device certificate of the second device has not been tampered with, and it may indicate that a device certificate public key included in the device certificate of the second device has not been tampered with either. In this way, the control component in the first device performs the signature verification on the model certificate of the target AI model by using the device certificate public key of the second device, to determine whether the model certificate of the target AI model has been tampered with. When the verification on the model certificate of the target AI model succeeds, it indicates that the model certificate of the target AI model has not been tampered with, and it may indicate that the model certificate public key included in the model certificate has not been tampered with either. Then, the first access control entry on which digital signing is performed by using the first private key (that is, the model certificate private key of the target AI model) is verified by using the model certificate public key. After the verification succeeds, it indicates that the first access control entry has not been tampered with either. In this case, the control component in the first device stores the model certificate of the target AI model and the first access control entry in a storage device for subsequent use.

In this embodiment of this application, the second device may receive the permission application request sent by the first device according to the secure transmission protocol, generate the authorization random number, and then generate the first access control entry of the target AI model based on the model identifier and the to-be-applied authorization verification parameter that are of the target AI model, and the authorization random number that are included in the permission application request. Because the first access control entry includes verification parameters in a plurality of dimensions, for example, the identifier of the authorized device and the authorized time period, model use permission of the AI application is verified based on the first access control entry, and fine-grained access permission control can be performed on the first device, to ensure that a device that invokes the target AI model is a device that has valid use permission.

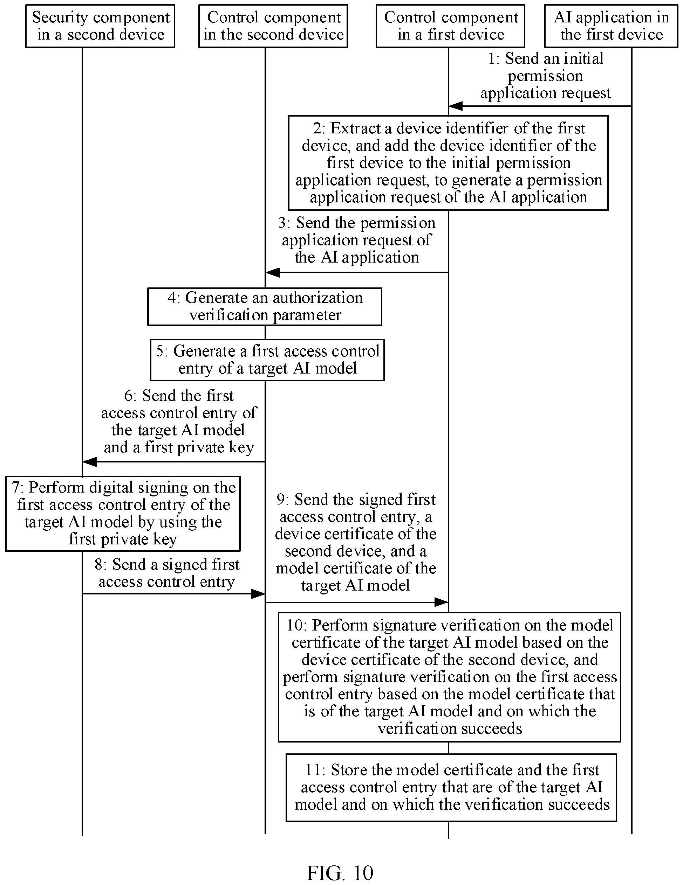

Based on the permission application method provided in FIG. 9, an embodiment of this application shows a flowchart of interaction between a first device and a second device to implement permission application of an AI application. Refer to FIG. 10. This procedure includes the following steps.
1: The AI application sends an initial permission application request to a control component in the first device.
2: The control component in the first device extracts a device identifier of the first device, and adds the extracted device identifier of the first device to the initial permission application request, to generate a permission application request of the AI application.
3: The control component in the first device sends the permission application request of the AI application to a control component in the second device.
4: The control component in the second device generates an authorization random number.
5: The control component in the second device generates a first access control entry of a target AI model based on the permission application request and the authorization random number.
6: The control component in the second device sends the first access control entry of the target AI model and a first private key to a security component in the second device.
7: The security component in the second device performs digital signing on the first access control entry of the target AI model by using the first private key.
8: The security component in the second device sends a signed first access control entry to the control component in the second device.
9: The control component in the second device sends the signed first access control entry, a device certificate of the second device, and a model certificate of the target AI model to the control component in the first device.
10: The control component in the first device performs signature verification on the model certificate of the target AI model based on the device certificate of the second device, and performs signature verification on the first access control entry based on the model certificate that is of the target AI model and on which the verification succeeds.
11: The control component in the first device stores the model certificate and the first access control entry that are of the target AI model and on which the verification succeeds in a storage device.

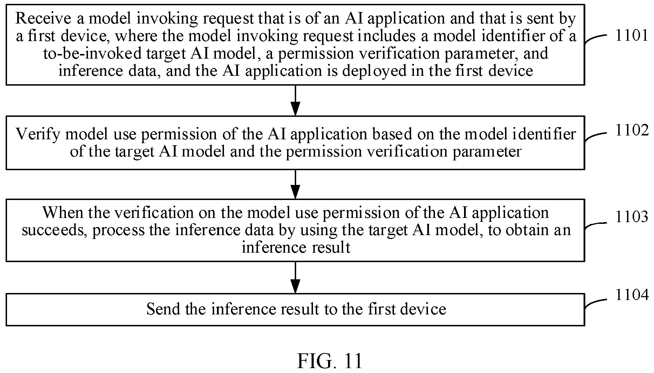

After the permission application is performed on the target AI model by using the method described in FIG. 9 or FIG. 10, the AI application in the first device may remotely invoke the target AI model by using the method described in FIG. 11. The method may be applied to the second device described above, where the target AI model is run on the second device. Refer to FIG. 11. The method includes the following steps.

Step 1101: Receive a model invoking request that is of the AI application and that is sent by the first device, where the model invoking request includes a model identifier of the to-be-invoked target AI model, a permission verification parameter, and inference data, and the AI application is deployed in the first device.

In this embodiment of this application, the AI application is deployed in the first device, and the target AI model is run on the second device. Based on this, the second device may receive the model invoking request that is of the AI application and that is sent by the first device. The model invoking request includes the model identifier of the to-be-invoked target AI model, the permission verification parameter, and the inference data.

For example, it can be learned from the foregoing descriptions that a control component in the first device may provide an API interface, and the AI application may send the model invoking request to the control component in the first device through the API interface provided by the control component in the first device. The model invoking request includes the model identifier of the to-be-invoked target AI model, the permission verification parameter, and the inference data. The permission verification parameter includes a device identifier of the first device, invoking time, and a to-be-verified random number, and the to-be-verified random number is a random number that is stored in the first device and that is used to verify model use permission of the AI application.

It can be learned from the foregoing descriptions that the control component in the first device stores a signed access control entry that is pre-applied from the second device for the AI application to invoke the target AI model, and the access control entry includes a random number. In this case, the control component in the first device may use the signed access control entry as a to-be-verified control entry. Correspondingly, the permission verification parameter includes the to-be-verified control entry, and the random number in the to-be-verified control entry is the to-be-verified random number.

Optionally, it can be learned from the foregoing descriptions that the control component in the first device may alternatively store a signed random number that is pre-applied from the second device for the AI application to invoke the target AI model. In this case, the signed random number may be used as the to-be-verified random number.

After receiving the model invoking request sent by the AI application, the control component in the first device may send the model invoking request to a control component in the second device, and the control component in the second device receives the model invoking request.

Step 1102: Verify the model use permission of the AI application based on the model identifier of the target AI model and the permission verification parameter.

In this embodiment of this application, after receiving the model invoking request sent by the control component in the first device, the control component in the second device may verify the model use permission of the AI application based on the model identifier of the target AI model and the permission verification parameter that are included in the model invoking request.

It should be noted that the second device stores access control information, the access control information includes an access control entry of the target AI model, and the access control entry of the target AI model includes the model identifier and an authorization verification parameter that are of the target AI model. In this case, the second device obtains the access control entry of the target AI model from the stored access control information based on the model identifier of the target AI model; searches the access control entry of the target AI model for a first access control entry in which the included authorization verification parameter matches the permission verification parameter; and when the first access control entry is found, determines that the verification on the model use permission of the AI application succeeds.

For example, the control component in the second device may compare the model identifier of the target AI model with a model identifier that is of an AI model and that is in an access control entry included in the access control information, to obtain, from the access control entry, an access control entry that includes the model identifier of the target AI model, and use the obtained access control entry as the access control entry of the target AI model.

It should be noted that there may be one or more access control entries of the target AI model. When there are a plurality of access control entries of the target AI model, the plurality of access control entries may include entries used to control access permission of different devices or applications for the target AI model, and may further include entries used to control different access time or other permission of a same device or application for the target AI model. This is not limited in this embodiment of this application.

For example, the permission verification parameter may include the device identifier of the first device, the invoking time, and the to-be-verified random number, and the access control entry of the target AI model includes an identifier of an authorized device, an authorized time period, and an authorization random number. Based on this, after obtaining the access control entry of the target AI model, for any access control entry of the target AI model, the control component in the second device may compare the device identifier that is of the first device and that is in the permission verification parameter with an identifier that is of an authorized device and that is in the access control entry, compare the invoking time with an authorized time period in the access control entry, and compare the to-be-verified random number with an authorization random number in the access control entry. If the identifier that is of the authorized device and that is included in the access control entry is the identifier of the first device, the authorized time period included in the access control entry includes the invoking time, and the authorization random number included in the access control entry is the to-be-verified random number, it indicates that the access control entry is the first access control entry, that is, the first access control entry is found. In this case, it may be determined that the verification on the model use permission of the AI application succeeds. If the first access control entry is not found, it indicates that the AI application in the first device is not authorized, and the AI application cannot invoke the target AI model.

It should be noted that, if the model invoking request includes the to-be-verified random number instead of the to-be-verified control entry, the to-be-verified random number may include third signature information. Based on this, before the access control entry of the target AI model is searched for the first access control entry in which the included authorization verification parameter matches the permission verification parameter, the third signature information of the to-be-verified random number may be further verified in a trusted execution environment TEE. When the verification on the third signature information succeeds, the step of searching the access control entry of the target AI model for the first access control entry in which the included authorization verification parameter matches the permission verification parameter is performed.

For example, it can be learned from the foregoing descriptions that the third signature information is obtained by performing digital signing by using a first private key. The first private key is a model certificate private key of the target AI model. Based on this, when the third signature information of the to-be-verified random number is verified, the third signature information of the to-be-verified random number may be verified by using a model certificate public key of the target AI model. If the verification on the third signature information succeeds, it indicates that the to-be-verified random number is not tampered with, and the step of searching the access control entry of the target AI model for the first access control entry in which the included authorization verification parameter matches the permission verification parameter may be performed. If the verification fails, it indicates that the to-be-verified random number may have been tampered with. In this case, the step of searching the access control entry of the target AI model for the first access control entry is not performed, and the entire procedure ends.

Optionally, if the model invoking request includes the to-be-verified control entry, and the to-be-verified control entry includes the to-be-verified random number, the to-be-verified control entry includes the third signature information. In this case, before searching for the first access control entry, the control component in the second device may further first verify the third signature information of the to-be-verified control entry, and when the verification succeeds, obtain the to-be-verified random number from the to-be-verified control entry, to search for the first access control entry based on the to-be-verified random number and another parameter in the permission verification parameter. For a process of verifying the third signature information, refer to the foregoing descriptions. Details are described herein in this embodiment of this application.

Step 1103: When the verification on the model use permission of the AI application succeeds, process the inference data by using the target AI model, to obtain an inference result.

In this embodiment of this application, when the verification on the model use permission of the AI application succeeds, the control component in the second device may send the inference data included in the model invoking request to an inference component in the second device. After receiving the inference data sent by the control component, the inference component may process the inference data by using the target AI model run by the inference component, to obtain the inference result; and then send the inference result to the control component in the second device.

Step 1104: Send the inference result to the first device.

After receiving the inference result sent by the inference component in the second device, the control component in the second device may send the inference result to the control component in the first device, and the control component in the first device feeds back the inference result to the AI application.

In this embodiment of this application, the target AI model is run on the second device, and the AI application is deployed in the first device. The second device may receive the model invoking request that is of the AI application and that is sent by the first device, and verify the model use permission of the AI application based on the model identifier of the target AI model and the permission verification parameter that are included in the model invoking request. In this way, access permission control can be performed on the first device, to ensure that the first device is a valid device that has use permission. When the verification on the model use permission of the AI application succeeds, the inference data included in the model invoking request of the AI application is processed by using the target AI model, to obtain the inference result, and the inference result is sent to the first device. Because the target AI model is always running on the second device in the entire invoking process, the first device cannot obtain model plaintext of the target AI model. This effectively ensures secure application of the target AI model.

In addition, the AI application sends the model invoking request by invoking the API interface of the control component, and invokes an AI model based on control components of two devices. The control components of the two devices include logic code that adapts to underlying hardware architectures. In this way, in a developing process, a developer of the AI application does not need to consider code implementation differences caused by different underlying hardware architectures. This reduces development difficulty of the AI application.

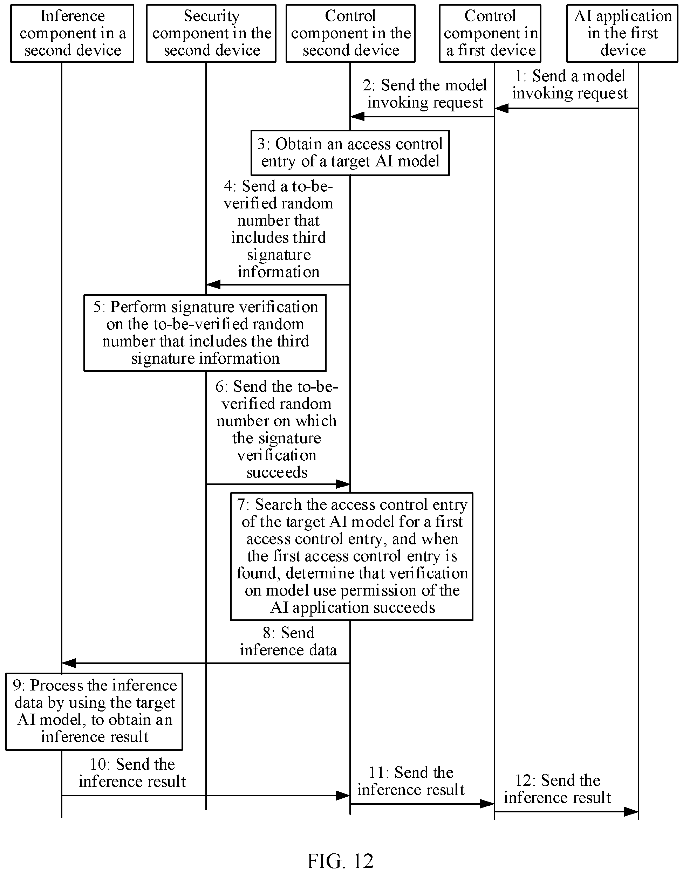

Based on the AI model invoking method provided in FIG. 11, an embodiment of this application shows an implementation flowchart of interaction between components of a device to implement remote invoking. Refer to FIG. 12. This procedure includes the following steps.
1: An AI application sends a model invoking request to a control component in a first device.
2: The control component in the first device sends the model invoking request to a control component in a second device.
3: The control component in the second device obtains an access control entry of a target AI model from access control information based on a model identifier that is of the target AI model and that is included in the model invoking request.
4: The control component in the second device sends a to-be-verified random number that includes third signature information to a security component in the second device.
5: The security component in the second device performs signature verification on the to-be-verified random number that includes the third signature information.
6: The security component in the second device sends, to the control component in the second device, the to-be-verified random number on which the signature verification succeeds.
7: The control component in the second device searches the access control entry of the target AI model for a first access control entry, and when the first access control entry is found, determines that verification on model use permission of the AI application succeeds.
8: The control component in the second device sends inference data in the model invoking request to an inference component.
9: The inference component processes the inference data by using the target AI model run by the inference component, to obtain an inference result.
10: The inference component sends the inference result to the control component in the second device.
11: The control component in the second device sends the inference result to the control component in the first device.
12: The control component in the first device sends the inference result to the AI application.

It should be noted that the components that are in the devices and that are mentioned in the foregoing embodiments are merely example components that are provided in embodiments of this application and that perform corresponding steps in embodiments of this application. In another possible case, functions of the foregoing components may be implemented by another component, or the functions of the foregoing plurality of components may be implemented in one component in a centralized manner, or functions of one component may be implemented by cooperation of a plurality of components. In conclusion, the components described above do not constitute a limitation on embodiments of this application.

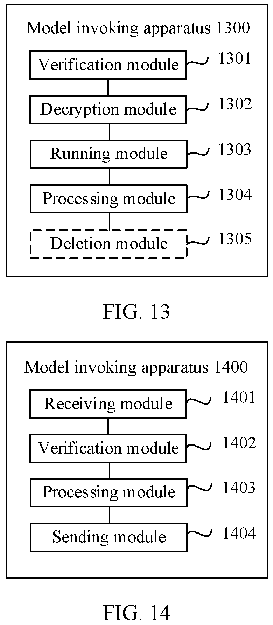

Refer to FIG. 13. An embodiment of the present invention provides a model invoking apparatus 1300. The apparatus includes a verification module 1301, a decryption module 1302, a running module 1303, and a processing module 1304.

The verification module 1301 is configured to perform step 601 in the foregoing embodiment.

The decryption module 1302 is configured to perform step 602 in the foregoing embodiment.

The running module 1303 is configured to perform step 603 in the foregoing embodiment.

The processing module 1304 is configured to perform step 604 in the foregoing embodiment.

Optionally, the apparatus further includes:
a deletion module 1305, configured to: when detecting that an AI application stops running, delete a decrypted model file from a memory.

Optionally, a first device stores encrypted access control information. The verification module 1301 includes:
a decryption submodule, configured to decrypt the encrypted access control information in a TEE, to obtain decrypted access control information; and
a verification submodule, configured to verify model use permission of the AI application based on a model identifier of a target AI model, a permission verification parameter, and the decrypted access control information.

Optionally, the access control information includes at least one access control entry of an AI model, and an access control entry of each AI model includes a model identifier and an authorization verification parameter that are of the corresponding AI model. The verification submodule is configured to:
obtain an access control entry of the target AI model from the decrypted access control information based on the model identifier of the target AI model;
search the access control entry of the target AI model for a first access control entry in which an included authorization verification parameter matches the permission verification parameter; and
when the first access control entry is found, determine that the verification on the model use permission of the AI application succeeds.

Optionally, the access control entry of the target AI model includes first signature information, the first signature information is obtained by a second device by performing digital signing on the access control entry of the target AI model, and the second device is a device that provides the target AI model.

The verification submodule is further configured to:
verify the first signature information; and
when the verification on the first signature information succeeds, perform the step of searching the access control entry of the target AI model for the first access control entry in which the included authorization verification parameter matches the permission verification parameter.

Optionally, the permission verification parameter includes at least one of a device identifier of the first device, invoking time, and an application identifier of the AI application.

Optionally, the decrypted model file includes second signature information, the second signature information is obtained by the second device by performing digital signing on the decrypted model file, and the second device is the device that provides the target AI model.

The apparatus 1300 is further configured to:
verify the second signature information; and
when the verification on the second signature information succeeds, trigger the running module 1303 to perform the step of loading the decrypted model file to the memory.

Optionally, the apparatus 1300 is further configured to:
send a permission application request of the AI application to the second device according to a secure transmission protocol, where the permission application request includes the model identifier and a to-be-applied authorization verification parameter that are of the target AI model, and the second device is the device that provides the target AI model;
receive the access control entry of the target AI model and the decrypted model file that are sent by the second device according to the secure transmission protocol, where the access control entry of the target AI model is generated by the second device based on the model identifier and the to-be-applied authorization verification parameter that are of the target AI model;
encrypt the access control entry of the target AI model and the decrypted model file in the TEE, to obtain an encrypted access control entry of the target AI model and an encrypted model file; and
store the encrypted access control entry of the target AI model and the encrypted model file.

Optionally, the first device includes a control component, and a model invoking request of the AI application is a request sent by the AI application to the control component by invoking an API interface provided by the control component.

In conclusion, in embodiments of this application, the first device verifies the model use permission of the AI application based on the model identifier of the to-be-invoked target AI model and the permission verification parameter of the AI application. In this way, access permission control can be performed on the AI application, to ensure that the AI application is a valid application that has the model use permission. When the verification on the model use permission of the AI application succeeds, the first device may decrypt the encrypted model file of the target AI model in the TEE, to obtain the decrypted model file; directly load the decrypted model file to the memory, to run the target AI model; and further process inference data of the AI application by using the target AI model, to obtain an inference result. In this way, in the entire process, the decrypted model file of the target AI model is stored in the memory, in other words, the decrypted model file of the target AI model is not flushed to disk, and another device cannot access the decrypted model file either. This effectively ensures secure application of the target AI model.

Refer to FIG. 14. An embodiment of this application provides a model invoking apparatus 1400. The apparatus 1400 includes a receiving module 1401, a verification module 1402, a processing module 1403, and a sending module 1404.

The receiving module 1401 is configured to perform step 1101 in the foregoing embodiment.

The verification module 1402 is configured to perform step 1102 in the foregoing embodiment.

The processing module 1403 is configured to perform step 1103 in the foregoing embodiment.

The sending module 1404 is configured to perform step 1104 in the foregoing embodiment.

Optionally, a second device stores access control information, the access control information includes an access control entry of a target AI model, and the access control entry of the target AI model includes a model identifier and an authorization verification parameter that are of the target AI model. The verification module 1402 is configured to:
obtain the access control entry of the target AI model from the access control information based on the model identifier of the target AI model;
search the access control entry of the target AI model for a first access control entry in which an included authorization verification parameter matches a permission verification parameter; and
when the first access control entry is found, determine that the verification on model use permission of an AI application succeeds.

Optionally, the permission verification parameter includes a device identifier of a first device, invoking time, and a to-be-verified random number, the to-be-verified random number is a random number that is stored in the first device and that is used to verify the model use permission of the AI application, an authorization verification parameter in the access control entry includes an identifier of an authorized device, an authorized time period, and an authorization random number, and the first access control entry is an entry in which an included identifier of an authorized device is the device identifier of the first device, an included authorization random number is the to-be-verified random number, and an included authorized time period includes the invoking time.

Optionally, the to-be-verified random number includes third signature information. The verification module 1402 is mainly configured to:
verify the third signature information of the to-be-verified random number in a trusted execution environment TEE; and
when the verification on the third signature information succeeds, perform the step of searching the access control entry of the target AI model for the first access control entry in which the included authorization verification parameter matches the permission verification parameter.

Optionally, the apparatus 1400 is further configured to:
receive a permission application request sent by the first device according to a secure transmission protocol, where the permission application request includes the model identifier and a to-be-applied authorization verification parameter that are of the target AI model; and
generate the first access control entry of the target AI model based on the model identifier and the to-be-applied authorization verification parameter that are of the target AI model, and the authorization random number, where the authorization verification parameter in the first access control entry includes the to-be-applied authorization verification parameter and the authorization random number.

Optionally, the apparatus 1400 is further configured to:
perform digital signing in the TEE on the first access control entry, to obtain a signed first access control entry, where the signed first access control entry includes the third signature information; and
send the signed first access control entry to the first device.

Optionally, the signed first access control entry is obtained by performing digital signing by using a first private key, and the first private key is a model certificate private key of the target AI model.

When sending the signed first access control entry to the first device, the apparatus 1400 is further configured to:
send, to the first device, a device certificate that is of the second device and that is signed by using a second private key and a model certificate that is of the target AI model and that is signed by using a third private key, where a model certificate of the target AI model includes a model certificate public key of the target AI model.

The second private key is a root certificate private key, the third private key is a device certificate private key of the second device, the signed device certificate of the second device is used by the first device to perform signature verification on the signed model certificate of the target AI model, and the signed model certificate of the target AI model is used by the first device to perform signature verification on the signed first access control entry.

Optionally, the second device stores a first private key encrypted by using the third private key and a third private key encrypted by using a device root key of the second device, and the device root key of the second device is stored in the TEE.

The apparatus 1400 is further configured to:
decrypt the encrypted third private key in the TEE by using the device root key of the second device, and obtain the first private key by using the third private key.

Optionally, the apparatus 1400 is further configured to:
generate the model certificate of the target AI model and the first private key;
perform digital signing in the TEE on the model certificate of the target AI model by using the third private key, and encrypt the first private key by using the third private key; and
store the signed model certificate of the target AI model and the encrypted first private key.

In conclusion, in this embodiment of this application, the target AI model is run on the second device, and the AI application is deployed in the first device. The second device may receive a model invoking request that is of the AI application and that is sent by the first device, and verify the model use permission of the AI application based on the model identifier of the target AI model and the permission verification parameter that are included in the model invoking request. In this way, access permission control can be performed on the AI application, to ensure that the AI application is a valid application that has the model use permission. When the verification on the model use permission of the AI application succeeds, inference data included in the model invoking request of the AI application is processed by using the target AI model, to obtain an inference result, and the inference result is sent to the first device. Because the target AI model is always running on the second device in the entire invoking process, the first device cannot obtain model plaintext of the target AI model. This effectively ensures secure application of the target AI model.

It should be noted that when the model invoking apparatus provided in the foregoing embodiments performs model invoking, division of the foregoing functional modules is used as an example for illustration. In actual application, the foregoing functions can be allocated to different functional modules and implemented based on a requirement, that is, an internal structure of a device is divided into different functional modules to implement all or some of the functions described above. In addition, the model invoking apparatus provided in the foregoing embodiments belongs to the same concept as embodiments of the model invoking method. For a specific implementation process thereof, refer to the method embodiments, and details are not described herein again.

All or some of the foregoing embodiments may be implemented by software, hardware, firmware, or any combination thereof. When the software is used to implement embodiments, all or some of embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital versatile disc (Digital Versatile Disc, DVD)), a semiconductor medium (for example, a solid state disk (Solid State Disk, SSD)), or the like.

A person of ordinary skill in the art may understand that all or some of the steps of embodiments may be implemented by the hardware or a program instructing related hardware. The program may be stored in a computer-readable storage medium. The storage medium may be a read-only memory, a magnetic disk, an optical disc, or the like.

The foregoing descriptions are not intended to limit embodiments of this application. Any modification, equivalent replacement, or improvement made without departing from the spirit and principle of embodiments of this application shall fall within the protection scope of embodiments of this application.

It should be noted that all actions of obtaining a signal, information, or data in this application are performed in compliance with a corresponding data protection regulation policy of a local country and authorized by a corresponding apparatus owner.

## Claims

1. A model invoking method, applied to a first device, wherein an artificial intelligence AI application is deployed in the first device, and the method comprises:
in response to a model invoking request of the AI application, verifying model use permission of the AI application based on a model identifier of a to-be-invoked target AI model and a permission verification parameter of the AI application;
when the verification on the model use permission of the AI application succeeds, decrypting an encrypted model file of the target AI model in a trusted execution environment TEE, to obtain a decrypted model file;
loading the decrypted model file to a memory, to run the target AI model; and
processing inference data of the AI application by using the target AI model, to obtain an inference result.

2. The method according to claim 1, wherein after the processing inference data of the AI application by using the target AI model, to obtain an inference result, the method further comprises:
when detecting that the AI application stops running, deleting the decrypted model file from the memory.

3. The method according to claim 1 or 2, wherein the first device stores encrypted access control information; and
the verifying model use permission of the AI application based on a model identifier of a to-be-invoked target AI model and a permission verification parameter of the AI application comprises:
decrypting the encrypted access control information in the TEE, to obtain decrypted access control information; and
verifying the model use permission of the AI application based on the model identifier of the target AI model, the permission verification parameter, and the decrypted access control information.

4. The method according to claim 3, wherein the access control information comprises at least one access control entry of an AI model, and an access control entry of each AI model comprises a model identifier and an authorization verification parameter that are of the corresponding AI model; and
the verifying the model use permission of the AI application based on the model identifier of the target AI model, the permission verification parameter, and the decrypted access control information comprises:
obtaining an access control entry of the target AI model from the decrypted access control information based on the model identifier of the target AI model;
searching the access control entry of the target AI model for a first access control entry in which a comprised authorization verification parameter matches the permission verification parameter; and
when the first access control entry is found, determining that the verification on the model use permission of the AI application succeeds.

5. The method according to claim 4, wherein the access control entry of the target AI model comprises first signature information, the first signature information is obtained by a second device by performing digital signing on the access control entry of the target AI model, and the second device is a device that provides the target AI model; and
before the searching the access control entry of the target AI model for a first access control entry in which a comprised authorization verification parameter matches the permission verification parameter, the method further comprises:
verifying the first signature information; and
when the verification on the first signature information succeeds, performing the step of searching the access control entry of the target AI model for the first access control entry in which the comprised authorization verification parameter matches the permission verification parameter.

6. The method according to any one of claims 1 to 5, wherein the permission verification parameter comprises at least one of a device identifier of the first device, invoking time, and an application identifier of the AI application.

7. The method according to any one of claims 1 to 6, wherein the decrypted model file comprises second signature information, the second signature information is obtained by the second device by performing digital signing on the decrypted model file, and the second device is the device that provides the target AI model; and
before the loading the decrypted model file to a memory, the method further comprises:
verifying the second signature information; and
when the verification on the second signature information succeeds, performing the step of loading the decrypted model file to the memory.

8. The method according to any one of claims 3 to 7, wherein the method further comprises:
sending a permission application request of the AI application to the second device according to a secure transmission protocol, wherein the permission application request comprises the model identifier and a to-be-applied authorization verification parameter that are of the target AI model, and the second device is the device that provides the target AI model;
receiving the access control entry of the target AI model and the decrypted model file that are sent by the second device according to the secure transmission protocol, wherein the access control entry of the target AI model is generated by the second device based on the model identifier and the to-be-applied authorization verification parameter that are of the target AI model;
encrypting the access control entry of the target AI model and the decrypted model file in the TEE, to obtain an encrypted access control entry of the target AI model and the encrypted model file; and
storing the encrypted access control entry of the target AI model and the encrypted model file.

9. The method according to any one of claims 1 to 8, wherein the first device comprises a control component, and the model invoking request of the AI application is a request sent by the AI application to the control component by invoking an API interface provided by the control component.

10. A model invoking apparatus, used in a first device, wherein an artificial intelligence AI application is deployed in the first device, and the apparatus comprises:
a verification module, configured to: in response to a model invoking request of the AI application, verify model use permission of the AI application based on a model identifier of a to-be-invoked target AI model and a permission verification parameter of the AI application;
a decryption module, configured to: when the verification on the model use permission of the AI application succeeds, decrypt an encrypted model file of the target AI model in a trusted execution environment TEE, to obtain a decrypted model file;
a running module, configured to load the decrypted model file to a memory, to run the target AI model; and
a processing module, configured to process inference data of the AI application by using the target AI model, to obtain an inference result.

11. The apparatus according to claim 10, wherein the apparatus further comprises:
a deletion module, configured to: when detecting that the AI application stops running, delete the decrypted model file from the memory.

12. The apparatus according to claim 10 or 11, wherein the first device stores encrypted access control information; and
the verification module comprises:
a decryption submodule, configured to decrypt the encrypted access control information in the TEE, to obtain decrypted access control information; and
a verification submodule, configured to verify the model use permission of the AI application based on the model identifier of the target AI model, the permission verification parameter, and the decrypted access control information.

13. The apparatus according to claim 12, wherein the access control information comprises at least one access control entry of an AI model, and an access control entry of each AI model comprises a model identifier and an authorization verification parameter that are of the corresponding AI model; and
the verification submodule is configured to:
obtain an access control entry of the target AI model from the decrypted access control information based on the model identifier of the target AI model;
search the access control entry of the target AI model for a first access control entry in which a comprised authorization verification parameter matches the permission verification parameter; and
when the first access control entry is found, determine that the verification on the model use permission of the AI application succeeds.

14. The apparatus according to claim 13, wherein the access control entry of the target AI model comprises first signature information, the first signature information is obtained by a second device by performing digital signing on the access control entry of the target AI model, and the second device is a device that provides the target AI model; and
the verification submodule is further configured to:
verify the first signature information; and
when the verification on the first signature information succeeds, perform the step of searching the access control entry of the target AI model for the first access control entry in which the comprised authorization verification parameter matches the permission verification parameter.

15. The apparatus according to any one of claims 10 to 14, wherein the permission verification parameter comprises at least one of a device identifier of the first device, invoking time, and an application identifier of the AI application.

16. The apparatus according to any one of claims 10 to 15, wherein the decrypted model file comprises second signature information, the second signature information is obtained by the second device by performing digital signing on the decrypted model file, and the second device is the device that provides the target AI model; and
the apparatus is further configured to:
verify the second signature information; and
when the verification on the second signature information succeeds, trigger the running module to perform the step of loading the decrypted model file to the memory.

17. The apparatus according to any one of claims 12 to 16, wherein the apparatus is further configured to:
send a permission application request of the AI application to the second device according to a secure transmission protocol, wherein the permission application request comprises the model identifier and a to-be-applied authorization verification parameter that are of the target AI model, and the second device is the device that provides the target AI model;
receive the access control entry of the target AI model and the decrypted model file that are sent by the second device according to the secure transmission protocol, wherein the access control entry of the target AI model is generated by the second device based on the model identifier and the to-be-applied authorization verification parameter that are of the target AI model;
encrypt the access control entry of the target AI model and the decrypted model file in the TEE, to obtain an encrypted access control entry of the target AI model and the encrypted model file; and
store the encrypted access control entry of the target AI model and the encrypted model file.

18. The apparatus according to any one of claims 10 to 17, wherein the first device comprises a control component, and the model invoking request of the AI application is a request sent by the AI application to the control component by invoking an API interface provided by the control component.

19. A computer-readable storage medium, wherein the computer-readable storage medium stores instructions, and when the instructions are run on a computer, the computer is enabled to perform the model invoking method according to any one of claims 1 to 9.
